# EUROPEAN PATENT APPLICATION

(11) **EP 4 840 738 A1**
(43) Date of publication of application: **18.11.2026**
(21) Application number: 25741518.2
(22) Date of filing: 15.01.2025
(51) Int. Cl.: B62K 5/01

(54) **ALL-TERRAIN VEHICLE**

(30) Priority: 15.01.2024 CN 202410057364; 31.10.2024 CN 202411547401
(71) Applicant: Zhejiang CFMOTO Power Co., Ltd., Hangzhou, Zhejiang 311199 (CN)
(72) Inventor: FANG, Ying, Hangzhou, Zhejiang 311199 (CN); LI, Jiajun, Hangzhou, Zhejiang 311199 (CN); ZHONG, Mei, Hangzhou, Zhejiang 311199 (CN); WU, Chuanjian, Hangzhou, Zhejiang 311199 (CN); XIONG, Minqiang, Hangzhou, Zhejiang 311199 (CN); LIU, Wanru, Hangzhou, Zhejiang 311199 (CN)
(74) Representative: Sun, Yiming
(86) International application number: PCT/CN2025/072461
(87) International publication number: WO 2025/152957

(57) **Abstract**

An all-terrain vehicle includes a vehicle body cover, a suspension system, a traveling system, and an engine. The engine is used to drive the traveling system. The engine includes a left cylinder, a right cylinder, a left cylinder head disposed on the left cylinder, and a right cylinder head disposed on the right cylinder. The left cylinder head is disposed rearward of the left cylinder. A horizontal distance from a left-cylinder axis to a longitudinal center plane is a first distance, and a horizontal distance from a right-cylinder axis to the longitudinal center plane is a second distance. An upper main beam includes a left upper main beam and a right upper main beam. A third distance and a fourth distance are defined between the left upper main beam and the right upper main beam. The fourth distance is greater than the third distance. The first distance or the second distance is less than half of the third distance, and a sum of the first distance and the second distance is less than the fourth distance. With the above arrangement, the all-terrain vehicle has favorable heat dissipation performance and provides a favorable riding experience. The aforementioned settings ensure excellent heat dissipation and a pleasant driving experience for all-terrain vehicles.

## Description

### RELATED APPLICATION

This present application claims the benefits of priority to Chinese Patent Application No. 2024100573647, filed on January 15, 2024 and entitled "ALL-TERRAIN VEHICLE", and Chinese Patent Application No. 2024115474019, filed on October 31, 2024 and entitled "ALL-TERRAIN VEHICLE", the entire contents of which are incorporated herein by reference.

### FIELD OF THE DISCLOSURE

The present invention relates to the technical field of vehicles, and particularly to an all-terrain vehicle.

### BACKGROUND OF THE DISCLOSURE

An all-terrain vehicle is a vehicle can travel on various terrains. Such a vehicle typically has a relatively high chassis, a suspension with favorable shock-absorbing performance, tires having favorable gripping performance, and relatively strong power. With the rapid development of vehicle, all-terrain vehicles are increasingly popular among consumers. All-terrain vehicles can travel in extremely harsh environments, including but not limited to beaches, mountains, forests and marshes, and have been widely used on farms and in entertainment venues.

Because of complex terrain environments in the wild, an all-terrain vehicle requires strong power output during travel. Such power demand directly leads to an increased number of cylinders, increased output power and increased heat generation of the all-terrain vehicle. Consequently, portions close to the rider's body especially the legs when the rider straddles the vehicle, may have a relatively high temperature, thereby reducing the riding experience.

### SUMMARY OF THE INVENTION

Embodiments of the present invention provide an all-terrain vehicle so as to solve at least one of the technical problems existing in the background art.

In order to address the shortcomings of existing vehicles in background, it is necessary to provide an all-terrain vehicle with good heat dissipation performance and a pleasant riding experience.

In a first aspect, the disclosure provides an all-terrain vehicle. The all-terrain vehicle includes a frame, a vehicle body cover, a suspension system, a traveling system, and an engine. The frame includes an upper main beam, a lower main beam, and a longitudinal beam connected between the upper beam and the lower main beam. The vehicle body cover and the suspension system are supported by the frame. The traveling system is at least partially connected to the frame through the suspension system. The engine is used to drive the traveling system. The engine includes a left cylinder, a right cylinder, a left cylinder head disposed on the left cylinder, and a right cylinder head disposed on the right cylinder. A plane perpendicular to a width direction of the frame and passing through a midpoint of the width of the frame is defined as a longitudinal center plane, and the longitudinal center plane passes through a midpoint of the distance between a left front wheel and a right front wheel. A central axis of the left cylinder is defined as a left-cylinder axis, and a central axis of the right cylinder is defined as a right-cylinder axis. A horizontal distance from the left-cylinder axis to the longitudinal center plane is defined as a first distance, and a horizontal distance from the right-cylinder axis to the longitudinal center plane is defined as a second distance. The upper main beam includes a left upper main beam and a right upper main beam, each extending in a length direction of the all-terrain vehicle. A straddle width between the left upper main beam and the right upper main beam is defined as a third distance. A top width between the left upper main beam and the right upper main beam at a longitudinal position closest to the left-cylinder axis and the right-cylinder axis is defined as a fourth distance. The fourth distance is greater than the third distance. The first distance or the second distance is less than half of the third distance, and a sum of the first distance and the second distance is less than the fourth distance.

In a second aspect, the disclosure provides an all-terrain vehicle. The all-terrain vehicle includes a frame, a vehicle body cover, a suspension system, a traveling system, and an engine. The frame includes an upper main beam, a lower main beam, and a longitudinal beam connected between the upper beam and the lower main beam. The vehicle body cover and the suspension system are supported by the frame. The traveling system is at least partially connected to the frame through the suspension system. The engine is used to drive the traveling system. The engine includes a left cylinder, a right cylinder, a left cylinder head disposed on the left cylinder, and a right cylinder head disposed on the right cylinder. A plane perpendicular to a width direction of the frame and passing through a midpoint of the width of the frame is defined as a longitudinal center plane, and the longitudinal center plane passes through a midpoint of the distance between a left front wheel and a right front wheel. A central axis of the left cylinder is defined as a left-cylinder axis, and a central axis of the right cylinder is defined as a right-cylinder axis. A horizontal distance from the left-cylinder axis to the longitudinal center plane is defined as a first distance, and a horizontal distance from the right-cylinder axis to the longitudinal center plane is defined as a second distance. The upper main beam includes a left upper main beam and a right upper main beam, each extending in a length direction of the all-terrain vehicle. A straddle width between the left upper main beam and the right upper main beam is defined as a third distance. A top width between the left upper main beam and the right upper main beam at a longitudinal position closest to the left-cylinder axis and the right-cylinder axis is defined as a fourth distance. The fourth distance is greater than the third distance. The first distance or the second distance is less than half of the third distance, and a sum of the first distance and the second distance is less than the fourth distance. The all-terrain vehicle further defines a reference plane perpendicular to a height direction of the frame and passing through a contact point between the traveling system and the ground. A normal projection of a cylinder head cover on the reference plane is defined as a cylinder-head-cover projection region. A region enclosed by a normal projection of the upper main beam on the reference plane in the height direction of the frame is defined as an upper-main-beam projection enclosed region. A portion of the cylinder-head-cover projection region falling within the upper-main-beam projection enclosed region is defined as an enclosed-are projection. A ratio of an area of the enclosed-region projection to an area of the cylinder-head-cover projection region is in the range from 0.6 to 0.9.

In a third aspect, the disclosure provides an all-terrain vehicle. The all-terrain vehicle includes a frame, a vehicle body cover, a suspension system, a traveling system, and an engine. The frame includes an upper main beam, a lower main beam, and a longitudinal beam connected between the upper beam and the lower main beam. The vehicle body cover and the suspension system are supported by the frame. The traveling system is at least partially connected to the frame through the suspension system. The engine is used to drive the traveling system. The engine includes a left cylinder, a right cylinder, a left cylinder head disposed on the left cylinder, and a right cylinder head disposed on the right cylinder. A plane perpendicular to a width direction of the frame and passing through a midpoint of the width of the frame is defined as a longitudinal center plane, and the longitudinal center plane passes through a midpoint of the distance between a left front wheel and a right front wheel. A central axis of the left cylinder is defined as a left-cylinder axis, and a central axis of the right cylinder is defined as a right-cylinder axis. A horizontal distance from the left-cylinder axis to the longitudinal center plane is defined as a first distance, and a horizontal distance from the right-cylinder axis to the longitudinal center plane is defined as a second distance. The upper main beam includes a left upper main beam and a right upper main beam, each extending in a length direction of the all-terrain vehicle. A straddle width between the left upper main beam and the right upper main beam is defined as a third distance. A top width between the left upper main beam and the right upper main beam at a longitudinal position closest to the left-cylinder axis and the right-cylinder axis is defined as a fourth distance. The fourth distance is greater than the third distance. The first distance or the second distance is less than half of the third distance, and a sum of the first distance and the second distance is less than the fourth distance. The all-terrain vehicle includes a continuously variable transmission. The continuously variable transmission including a drive pulley and a driven pulley, and the drive pulley is connected to the driven pulley in a transmission mode. An opening of an exhaust passage is oriented rearward of the all-terrain vehicle, and a rearmost end of the continuously variable transmission is located forward of a rearmost end of the exhaust passage. The drive pulley is located behind the driven pulley. A line connecting a normal projection, on the longitudinal center plane, of an axis center of the drive pulley and a normal projection, on the longitudinal center plane, of an axis center of the driven pulley is a transmission projection line. The cylinder has a cylinder axis, and a normal projection of the cylinder axis on the longitudinal center plane is a cylinder projection line. An angle defined between the cylinder projection line and the transmission projection line opens rearward of the all-terrain vehicle, and the angle is in the range from 35° to 75°.

Compared with related vehicle, the present invention achieves stronger power and better heat dissipation performance for the all-terrain vehicle by reasonably arranging the layout of the engine. Moreover, it provides a more comfortable riding experience for the users.

The drawings described herein are provided for further understanding of the present application and constitute a part of the present application. The exemplary embodiments of the present application and the description thereof are intended to explain the present application and do not constitute an improper limitation of the present application. In the drawings:
FIG. 1 is a perspective view of an all-terrain vehicle in accordance with embodiments of the present disclosure.
FIG. 2 is a top view of the internal structure of the all-terrain vehicle in accordance with embodiments of the present disclosure.
FIG. 3 is a left side view of the internal structure of the all-terrain vehicle according to an embodiment of the present application;
FIG. 4 is an exploded view of an engine of the all-terrain vehicle according to an embodiment of the present application;
FIG. 5 is an assembly top view of an upper main beam and the engine of the all-terrain vehicle according to an embodiment of the present application;
FIG. 6 is a top view of the internal structure of the all-terrain vehicle with the frame removed according to an embodiment of the present application;
FIG. 7 is a cross-sectional view of the engine of the all-terrain vehicle with the frame removed according to an embodiment of the present application;
FIG. 8 is an assembly left side view of the engine, the frame and the traveling system of the all-terrain vehicle according to an embodiment of the present application;
FIG. 9 is a side view of the frame, the traveling system, a prime power assembly and an exhaust assembly of the all-terrain vehicle according to an embodiment of the present application;
FIG. 10 is a top view of the frame, the traveling system, the prime power assembly and the exhaust assembly of the all-terrain vehicle according to an embodiment of the present application;
FIG. 11 is a top view of the frame, the traveling system, the prime power assembly, the exhaust assembly and a saddle assembly of the all-terrain vehicle according to an embodiment of the present application;
FIG. 12 is an exploded view of the frame, a fuel assembly, the prime power assembly, the saddle assembly and an electrical assembly of the all-terrain vehicle according to an embodiment of the present application;

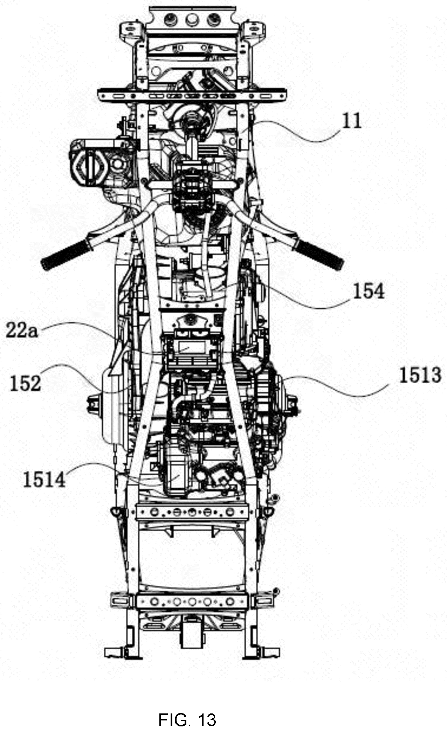

FIG. 13 is a top view of the frame, the fuel assembly, the prime power assembly and the electrical assembly of the all-terrain vehicle according to an embodiment of the present application;

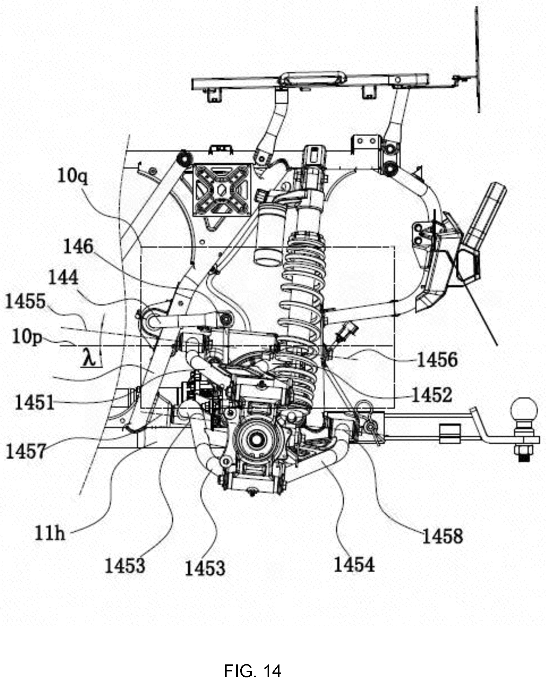

FIG. 14 is an exploded structural view of the frame, the suspension system and a rear axle mechanism of the all-terrain vehicle according to an embodiment of the present application;
FIG. 15 is an exploded view of the electrical assembly and the vehicle body cover of the all-terrain vehicle according to an embodiment of the present application;
FIG. 16 is a partial cross-sectional view of the electrical assembly, the vehicle body cover and the traveling system of the all-terrain vehicle according to an embodiment of the present application;
FIG. 17 is an assembly schematic diagram of a dashboard mounting cover and a body control module of the all-terrain vehicle according to an embodiment of the present application;
FIG. 18 is an assembly schematic diagram of the body control module and the frame of the all-terrain vehicle according to an embodiment of the present application;
FIG. 19 is an exploded view of a dashboard front cover and a dashboard upper cover of the all-terrain vehicle according to an embodiment of the present application;
FIG. 20 is an exploded structural view of a storage box assembly, the frame, the saddle assembly and a front mudguard of the all-terrain vehicle according to an embodiment of the present application;
FIG. 21 is an exploded view of the storage box assembly, a first side cover and a second side cover of the all-terrain vehicle according to an embodiment of the present application;
FIG. 22 is a schematic structure diagram of a storage lid of the all-terrain vehicle according to an embodiment of the present application;
FIG. 23 is an assembly schematic diagram of the storage box assembly and the front mudguard of the all-terrain vehicle according to an embodiment of the present application;
FIG. 24 is an exploded view of the front mudguard, the frame and an electrical mounting plate of the all-terrain vehicle according to an embodiment of the present application;
FIG. 25 is an exploded view of a electrical mounting plate and a electrical assembly in accordance with embodiments of the present disclosure.
FIG. 26 is a partial right view of the vehicle body cover and the prime mover assembly of the all-terrain vehicle in accordance with embodiments of the present disclosure.
FIG. 27 is an exploded view of the frame, the vehicle body cover and the prime power assembly of the all-terrain vehicle according to an embodiment of the present application;
FIG. 28 is a schematic structure diagram of the frame, the vehicle body cover and a cargo box assembly of the all-terrain vehicle according to an embodiment of the present application;
FIG. 29 is an exploded view of a muffler, the vehicle body cover and the cargo box assembly of the all-terrain vehicle according to an embodiment of the present application;
FIG. 30 is an exploded structural view of a lamp assembly, the vehicle body cover and a taillight wiring harness at a rear portion of the all-terrain vehicle according to an embodiment of the present application;
FIG. 31 is a schematic diagram of a harness fixing structure of the all-terrain vehicle according to an embodiment of the present application;
FIG. 32 is a cross-sectional view of the traveling system, the suspension system and a transmission assembly of the all-terrain vehicle according to an embodiment of the present application;
FIG. 33 is a partial enlargement view of portion B in FIG. 32;
FIG. 34 is an exploded view of the traveling system, the suspension system and the transmission assembly of the all-terrain vehicle according to an embodiment of the present application.

### DETAIL DESCRIPTION

The following will provide a detailed description of the present invention in conjunction with the specific embodiment shown in the accompanying drawings, but the embodiment shown and the embodiments discussed do not limit the present invention. Structural, method, or functional changes may be made by ordinary technical personnel in the art based on these disclosed embodiments, and such changed embodiments are also included in the scope of protection of the present invention.

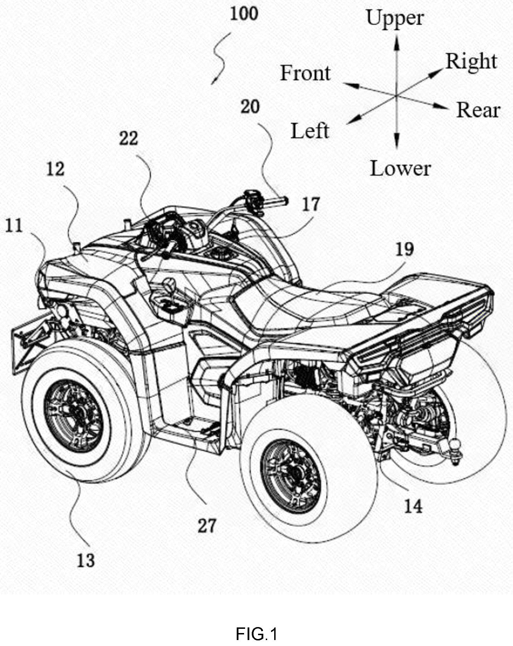

As shown in FIG. 1 to FIG. 3, the present disclosure provides an all-terrain vehicle 100. The all-terrain vehicle 100 includes a frame 11, a vehicle body cover 12, a traveling system 13, a suspension system 14, a prime power assembly 15, a transmission assembly 16, a fuel assembly 17, a saddle assembly 19, a steering assembly 20, an electrical assembly 22 and a footrest assembly 27. The frame 11 constitutes a basic structure of the all-terrain vehicle 100. The vehicle body cover 12 is at least partially disposed on the frame 11 and defines an accommodation space 115 together with the frame 11. The prime power assembly 15 includes an engine 151, and the engine 151 is at least partially disposed in the accommodation space 115. The suspension system 14 is at least partially connected to the frame 11. The traveling system 13 is connected to the frame 11 through the suspension system 14. The transmission assembly 16 is connected to the engine 151 in a transmission mode and is capable of transmitting power of the engine 151 to the traveling system 13. The fuel assembly 17 is supported by the frame 11. The saddle assembly 19 is used for a user to ride on, and the footrest assembly 27 is disposed below the saddle assembly 19. The steering assembly 20 is operable to steer the all-terrain vehicle 100. In order to clearly define the embodiment of the present application, front, rear, up (upper), down (lower), left and right directions are defined as shown in FIG. 1. A front-rear direction is a length direction of the frame 11, a left-right direction is a width direction of the frame 11, and an upper-lower direction is a height direction of the frame 11. A plane perpendicular to the height direction of the all-terrain vehicle 100 and passing through at least one contact point between the traveling system 13 and a horizontal surface is defined as a reference plane 102. A plane perpendicular to the length direction of the frame 11 and passing through a midpoint of wheelbase of the all-terrain vehicle 100 is defined as a transverse center plane 105 of the all-terrain vehicle 100. A plane perpendicular to the width direction of the frame 11 and passing through a midpoint of the width of the all-terrain vehicle 100 is defined as a longitudinal center plane 10s of the all-terrain vehicle 100, and the saddle assembly 19 extends across the longitudinal center plane 10s.

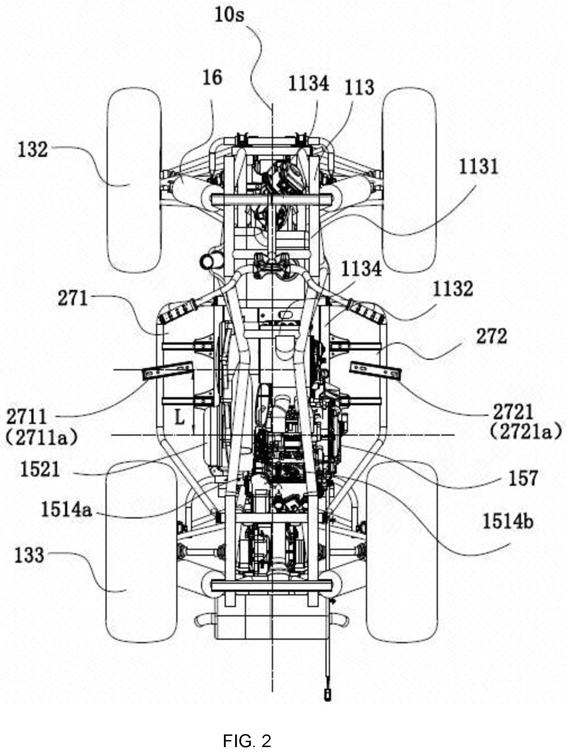

As shown in FIG. 2 to FIG. 4, the engine 151 according to an embodiment includes a cylinder head cover 1512, a cylinder 1513 and a cylinder head 1514. In the height direction of the all-terrain vehicle 100, the cylinder head cover 1512 is used to seal the cylinder head 1514.The cylinder head 1514 is connected to the cylinder 1513 and is located above the cylinder 1513. A plurality of cylinder heads 1514 are distributed and disposed in the width direction of the all-terrain vehicle 100. The cylinder heads 1514 are oriented toward the rear of the all-terrain vehicle 100 in the length direction of the all-terrain vehicle 100. It should be noted that, according to power requirements of the all-terrain vehicle 100, one, two, three or more cylinder heads 1514 may be provided, without limitation.

The prime power assembly 15 further includes a continuously variable transmission 152 and a magneto 157. The CVT 152 and the engine 151 are distributed in the width direction of the all-terrain vehicle 100, and the CVT 152 is connected to the engine 151 in a transmission mode. The CVT 152 includes a drive pulley 1521 and a driven pulley 1522. The drive pulley 1521 is connected to the driven pulley 1522 in a transmission mode. The magneto 157 can be driven to generate electricity. The magneto 157 is disposed on a right side of the all-terrain vehicle 100, and the drive pulley 1521 is disposed on a left side of the all-terrain vehicle 100.

As shown in FIG. 2 to FIG. 5, the frame 11 includes a main frame 113. The main frame 113 includes an upper main beam 1131, a lower main beam 1132, a longitudinal beam 1133 and a cross beam 1134. The vehicle body cover 12 is supported by at least one of the upper main beam 1131, the lower main beam 1132 and the longitudinal beam 1133. The longitudinal beam 1133 is used to connect the upper main beam 1131 and the lower main beam 1132 in the height direction of the all-terrain vehicle 100. The upper main beam 1131 includes two upper main beam tubes disposed substantially symmetrically about the longitudinal center plane 10s, and the lower main beam 1132 includes two lower main beam tubes disposed substantially symmetrically about the longitudinal center plane 10s. In the width direction of the frame 11, the two upper main beam tubes and the two lower main beam tubes are both connected by the cross beam 1134. It should be noted that the upper main beam 1131, the lower main beam 1132 and the cross beam 1134 define the accommodation space 115 described above, and the engine 151 and the transmission assembly 16 are at least partially disposed in the accommodation space 115. Optionally, in the height direction of the frame 11, a distance between an uppermost end of the cylinder head 1514 of the engine 151 and a lowermost end of the upper main beam 1131 is in the range from 10 mm to 50 mm. If the distance is less than 10 mm, heat of the cylinder head 1514 may be transferred to a region above the seat cushion, affecting user experience, and installation of the engine 151 may be inconvenient. If the distance is greater than 50 mm, space between the upper main beam 1131 and the lower main beam 1132 may be wasted and installation requirements of other components may not be satisfied.

The distance between the uppermost end of the cylinder head 1514 of the engine 151 and the lowermost end of the upper main beam 1131 is in the range from 20 mm to 40 mm. In some embodiments, the distance between the uppermost end of the cylinder head 1514 of the engine 151 and the lowermost end of the upper main beam 1131 is in the range from 25 mm to 35 mm. With this arrangement, a reliable distance between the cylinder head 1514 and the frame 11 is ensured, which avoids heat conduction from the cylinder head 1514 to the frame 11, improves user experience, facilitates installation and removal of the engine 151, and the space between the upper main beam 1131 and the lower main beam 1132 is effectively utilized.

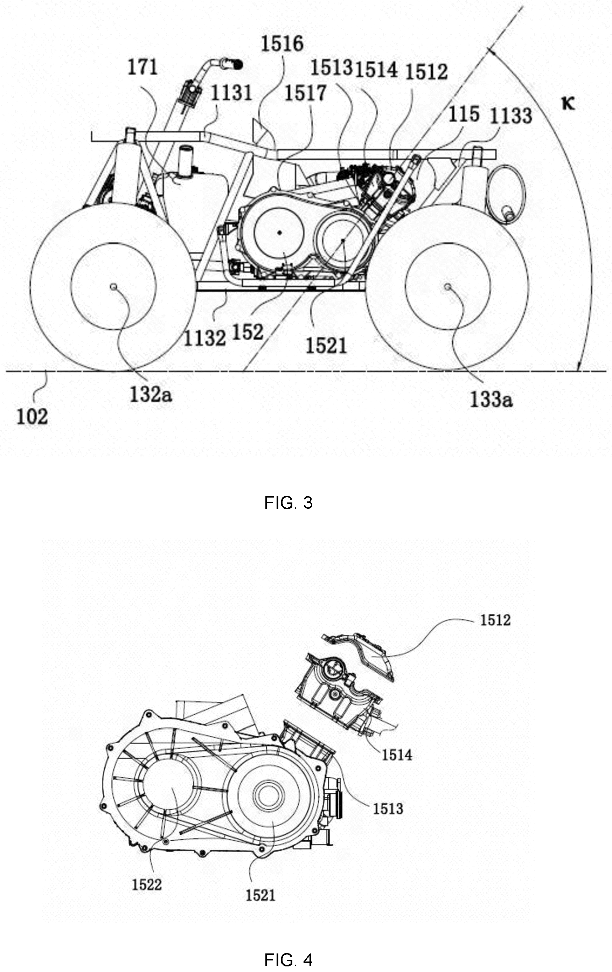

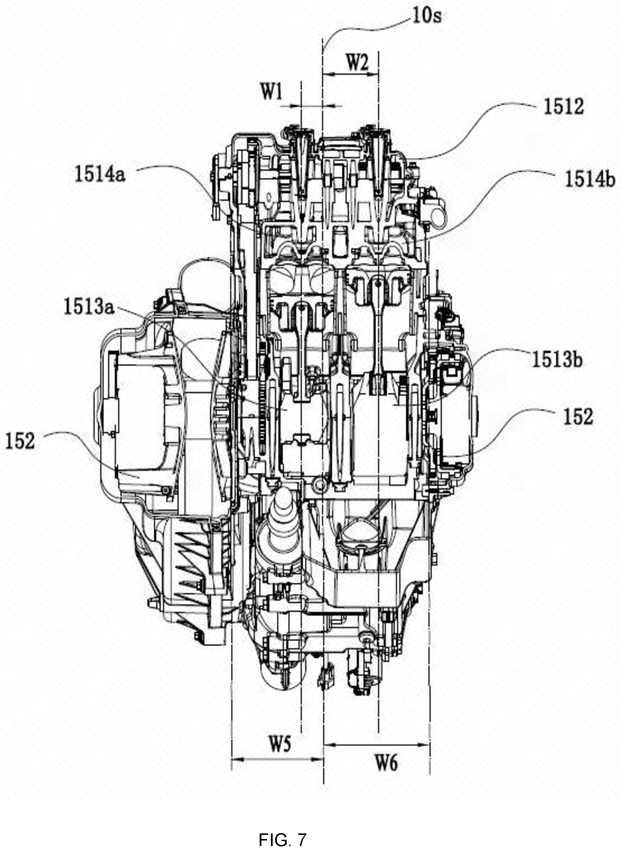

As shown in FIG. 4 to FIG. 7, the engine 151 further includes at least two cylinder heads 1514 arranged side by side on the cylinder 1513 and cylinder head covers 1512 mounted on the cylinder heads 1514. The two cylinder heads 1514 are disposed on the cylinder 1513. The cylinder heads 1514 are oriented toward the rear of the all-terrain vehicle 100. A normal projection of the cylinder head cover 1512 on the reference plane 102 is defined as a cylinder-head-cover projection region S1.A region enclosed by a normal projection of the upper main beam 1131 on the reference plane 102 in the height direction of the vehicle frame 11 is defined as an upper-main-beam projection enclosed region. A portion of the cylinder-head-cover projection region S1 falling within the upper-main-beam projection enclosed region is defined as an enclosed-region projection S2, and a ratio of an area of the enclosed-region projection S2 to an area of the cylinder-head-cover projection region S1 is in the range from 0.6 to 0.9.

The ratio of the area of the enclosed-region projection S2 to the area of the cylinder head cover projection region S1 is in the range from 0.6 to 0.9. In fact, when the ratio of the enclosed-region projection S2 to the cylinder-head-cover projection region S1 is less than 0.6, the engine 151 occupies too little internal space of the frame 11, causing excessive exposure of the cylinder head 1514, which increases heat-insulation cost of the all-terrain vehicle 100 and may even cause deviation of the center of gravity, thereby affecting stability.

Optionally, the ratio of the enclosed-region projection S2 to the cylinder-head-cover projection region S1 is in the range from 0.7 to 0.85. Further, the ratio of the enclosed-region projection S2 to the cylinder-head-cover projection region S1 is in the range from 0.75 to 0.8. This arrangement enables the engine 151 to occupy the internal space of the frame 11 as much as possible, improves the utilization rate of the internal space of the frame 11, and avoids extension of relevant engine components out of the space enclosed by the frame 11, thereby avoiding an additional heat-insulating mechanism or additional heat-insulation cost.

In one embodiment, the cylinder head 1514 includes a left cylinder head 1514a and a right cylinder head 1514b. The left cylinder head 1514a and the right cylinder head 1514b are distributed in the width direction of the frame 11 and are substantially parallel to each other. In the width direction of the frame 11, the left cylinder head 1514a is disposed on the left side of the all-terrain vehicle 100, and the right cylinder head 1514b is disposed on the right side of the all-terrain vehicle 100. The cylinder 1513 includes a left cylinder 1513a and a right cylinder 1513b. The left cylinder head 1514a is disposed on the left cylinder 1513a, and the right cylinder head 1514b is disposed on the right cylinder 1513b. A central axis of the left cylinder 1513a is a left-cylinder axis , and a central axis of the right cylinder 1513b is a right-cylinder axis. A horizontal distance from the left-cylinder axis to the longitudinal center plane 10s is a first distance W1, namely a left cylinder spacing. A horizontal distance from the right-cylinder axis to the longitudinal center plane 10s is a second distance W2, namely a right cylinder spacing. The ratio of the first distance W1 to the second distance W2 is in the range from 0 to 1. The ratio of the first distance W1 to the second distance W2 is in the range from 0.2 to 0.8. In one embodiment, the ratio of the first distance W1 to the second distance W2 is in the range from 0.4 to 0.6. In one embodiment, the first distance W1 is in the range from 0 mm to 200 mm, the second distance W2 is in the range from 200 mm to 400 mm, the first distance W1 is 25 mm, the second distance W2 is 130 mm, and the left-cylinder axis and the right-cylinder axis are both located on the same side of the longitudinal center plane 10s.The ratio of the first distance W1 to the second distance W2 is 0.19. In one embodiment, the first distance W1 is 20 mm, the second distance W2 is 95 mm, and the left-cylinder axis and the right-cylinder axis are located on opposite sides of the longitudinal center plane 10s, in this case, the ratio is 0.21.

It should be noted that in the width direction of the frame 11, a preset gap is defined between the left cylinder head 1514a and the right cylinder head 1514b. In one embodiment, the preset gap is in the range from 6 mm to 12 mm. This arrangement fully utilizes the internal space of the frame 11 and ensures a sufficient gap between the left cylinder head 1514a and the right cylinder head 1514b, so that heat generated by the two cylinder heads can be rapidly dissipated, damage to the engine caused by overheating can be avoided, and mutual heat radiation between the two cylinder heads can be reduced, thereby improving heat dissipation efficiency.

In one embodiment, the upper main beam 1131 includes a left upper main beam 1131a and a right upper main beam 1131b, each extending in the length direction of the all-terrain vehicle 100. At a longitudinal position where a rider's legs are located when the rider straddles the all-terrain vehicle 100, a width between the left upper main beam 1131a and the right upper main beam 1131b is defined as a third distance W3, namely a straddle width. At a longitudinal position closest to the left-cylinder axis and the right-cylinder axis, a width between the left upper main beam 1131a and the right upper main beam 1131b is a fourth distance W4, namely a top width of the engine 151. The fourth distance W4 is greater than the third distance W3.

In one embodiment, the first distance W1 or the second distance W2 is less than half of the third distance W3, and the sum of the first distance W1 and the second distance W2 is less than the fourth distance W4.

In one embodiment, the first distance W1 is less than half of the fourth distance W4.

The arrangement between the engine 151 and the frame 11 more reasonable and improve space utilization. The engine 151 can be prevented from being excessively offset toward one side of the longitudinal center plane 10s, which would otherwise affect rider's leg clamping or increase heat near the rider's legs and increase heat-insulation cost. Therefore, the arrangement position between the engine 151 and the upper main beam 1131 is reasonable, facilitates leg clamping by the rider, and improves riding stability and safety.

As shown in FIG. 4, in the width direction of the frame 11, a distance between a leftmost end of the left cylinder head 1514a and the longitudinal center plane 10s is a fifth distance W5, and a distance between a rightmost end of the right cylinder head 1514b and the longitudinal center plane 10s is a sixth distance W6. A ratio of the fifth distance W5 to the sixth distance W6 is in the range from 0.2 to 1.8. In one embodiment, the ratio of the fifth distance W5 to the sixth distance W6 is in the range from 0.5 to 1.5. In one embodiment, the ratio of the fifth distance W5 to the sixth distance W6 is in the range from 0.8 to 1.2. This arrangement ensures that each of the left cylinder head 1514a and the right cylinder head 1514b is spaced from a leg clamping region, and avoids excessive offset, so that heat generated by the cylinder heads can be rapidly dissipated, damage to the engine caused by overheating can be avoided. Meanwhile, the arrangement prevents the heat generated by the left cylinder head 1514a and the right cylinder head 1514b from affecting the rider's experience. In one embodiment, a distance between a leftmost end of the engine 151 and the longitudinal center plane 10s is a seventh distance W7, and a distance between a rightmost end of the engine 151 and the longitudinal center plane 10s is an eighth distance W8. A ratio of the seventh distance W7 to the eighth distance W8 is in the range from 0.6 to 1.3. The ratio of the seventh distance W7 to the eighth distance W8 is in the range from 0.7 to 1.2. In one embodiment, the ratio of the seventh distance W7 to the eighth distance W8 is in the range from 0.8 to 1. In one embodiment, the ratio is 0.9. This arrangement allows the engine 151 to be arranged more narrowly in the width direction of the frame 11, so that the rider has good clamping performance and favorable ergonomics, thereby greatly improving user experience.

As shown in FIG. 1 to FIG. 3, the steering assembly 20 is disposed on the frame 11 and is located at the front of the all-terrain vehicle 100. The engine 151 further includes an air intake assembly 1516 and an air intake port 1517. The air intake port 1517 is defined on a housing of the engine 151 and is connected to the air intake assembly 1516. The air intake assembly 1516 includes an air intake pipe and an air filter. The air intake pipe connects the air filter and the air intake port 1517, thereby delivering filtered air from the air filter to the air intake port 1517 to satisfy the air intake requirement of the engine 151. In one embodiment, a normal projection of the frame 11 on the reference plane 102 is a first projection, a normal projection of the air intake port 1517 on the reference plane 102 is a second projection, and the second projection is disposed in a region outside the first projection. The air intake port 1517 is defined between the steering assembly 20 and the cylinder heads 1514, thereby making air intake smoother and facilitating arrangement of the air intake structure.

As shown in FIG. 3, the fuel assembly 17 includes a fuel tank 171 used to supply energy to the engine 151. In the length direction of the all-terrain vehicle 100, the air filter is disposed between the fuel tank 171 and the engine 151. That is, the engine 151 is disposed at the rear, the fuel tank 171 at the front, and the air filter in the middle. In the height direction of the all-terrain vehicle 100, the fuel tank 171 is disposed between the upper main beam 1131 and the lower main beam 1132. The fuel tank 171 may be disposed near the upper main beam 1131.

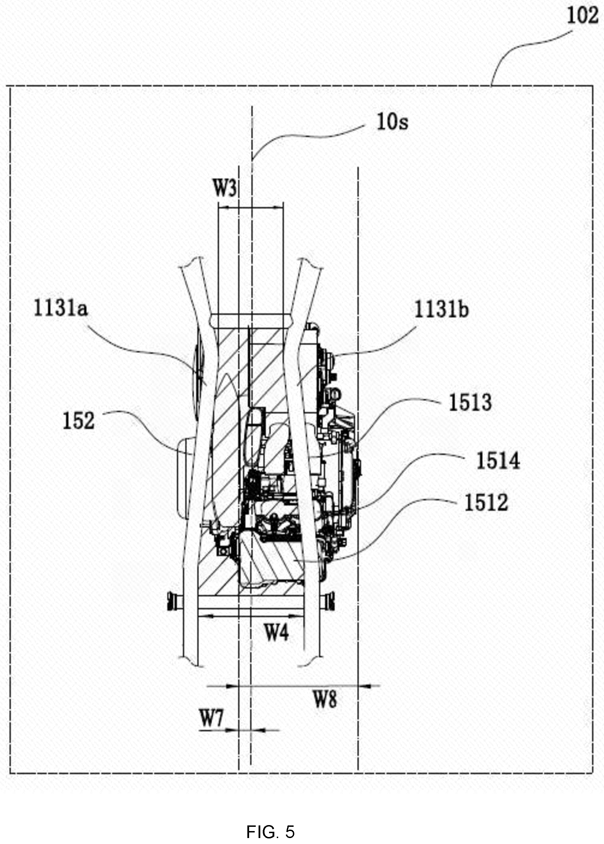

As shown in FIG. 5, the fuel tank 171 may also be disposed close to the lower main beam 1132, thereby making the center of gravity of the all-terrain vehicle 100 lower and improving the controllability of the all-terrain vehicle 100. At the same time, the space at the front portion of the all-terrain vehicle 100 can also be fully utilized.

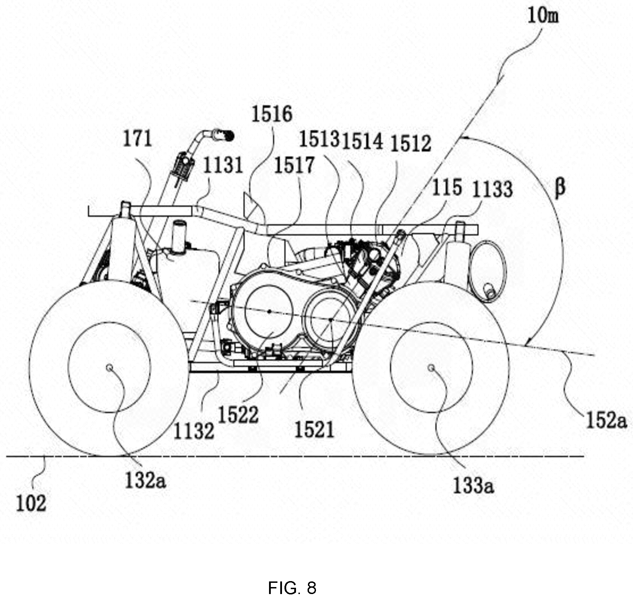

As shown in FIG. 3 and FIG. 8, the cylinder 1513 has a cylinder axis 10m. A normal projection of the cylinder axis 10m on the longitudinal center plane 10s is a cylinder projection line. An angle κ defined between the cylinder projection line and the reference plane 102 is in the range from 45° to 65°. In another embodiment, the angle κ defined between the cylinder projection line and the reference plane 102 is in the range from 50° to 60°. Through such arrangement, the height of the cylinder head 1514 of the engine 151 can be controlled within a reasonable range, which is beneficial to the overall vehicle layout, making the engine 151 layout compact, facilitating smoother routing of the intake system and exhaust system of the engine 151, thereby improving performance and reliability of the engine 151.

Optionally, a line connecting a normal projection of an axis center of the drive pulley 1521 on the longitudinal center plane 10s and a normal projection of an axis center of the driven pulley 1522 on the longitudinal center plane 10s is defined as a transmission projection line 152a. An angle β between the cylinder projection line and the transmission projection line opens rearward of the all-terrain vehicle 100, the angle β is in the range from 35° to 75°. Optionally, the angle β is in the range of 40° to 70°. More optionally, the angle β is in the range of 45° to 65°. For example, in an embodiment, the angle β is 64.7°. This arrangement allows an exhaust pipe 321 to be routed directly rearward, thereby shortening the overall length of the exhaust pipe 321. It also prevents angle β from being excessively large, which would lengthen the exhaust pipe 321, and excessively small, which would position the cylinder heads 1514 too far rearward and interfere with the assembly of other components.

As shown in FIG. 2, in the width direction of the frame 11, a footrest assembly 27 is disposed on either side of the frame 11. The footrest assembly 27 includes a left footrest 271 and a right footrest 272 substantially symmetrically distributed with respect to the longitudinal center plane 10s. As an embodiment, the left footrest 271 is provided with left footrest serrations 2711 for increasing friction, and the right footrest 272 is provided with right footrest serrations 2721 for increasing friction. The left footrest serrations 2711 and the right footrest serrations 2721 may be shaped to adapt to the footrests, and in one embodiment are rectangular. A normal projection of the left footrest serrations 2711 on the reference plane 102 is a left footrest serrations projection 2711a, and a normal projection of the right footrest serrations 2721 on the reference plane 102 is a right footrest serrations projection 2721a.As an embodiment, the traveling system 13 includes front wheels 132 and rear wheels 133. The front wheels 132 have a first rotation center 132a, and the rear wheels 133 have a second rotation center 133a. In the length direction of the frame 11, the left footrest serrations projection 2711a and the right footrest serrations projection 2721a are located between the first rotation center 132a and the second rotation center 133a, and are located at an intermediate position between the first rotation center 132a and the second rotation center 133a.As an embodiment, the front wheels 132 include a left front wheel 1321 and a right front wheel 1322, and the rear wheels 133 include a left rear wheel 1331 and a right rear wheel 1332. The longitudinal center plane 10s passes through a midpoint of the distance between the left front wheel 1321 and the right front wheel 1322. Normal projections of the left front wheel 1321, the right front wheel 1322, the left rear wheel 1331 and the right rear wheel 1332 on the reference plane 102 define a projection region, and the left footrest serrations projection 2711a and the right footrest serrations projection 2721a are both disposed in the projection region.

As an embodiment, in the length direction of the all-terrain vehicle 100, a distance L between a rightmost end of the left footrest serrations projection 2711a and the rotation center of the drive pulley 1521 is greater than 0 and not greater than 420 mm. A distance between a leftmost end of the right footrest serrations projection 2721a and a rotation center of the magneto 157 is greater than 0 and not greater than 420 mm. When the distance between the rightmost end of the left footrest serrations projection 2711a and the rotation center of the drive pulley 1521 is larger than 420 mm, a center of gravity of the all-terrain vehicle 100 is shifted rearward and stability is reduced. When the distance between the leftmost end of the right footrest serrations projection 2721a and the rotation center of the magneto 157 is larger than 420 mm, the center of gravity of the all-terrain vehicle 100 is shifted rearward and stability is reduced. It should be noted that in the length direction of the all-terrain vehicle 100, the distance between the rightmost end of the left footrest serrations projection 2711a and the rotation center of the drive pulley 1521 is in the range from 40 mm to 380 mm. The distance between the leftmost end of the right footrest serrations projection 2721a and the rotation center of the magneto 157 is in the range from 40 mm to 380 mm. Furthermore, in the length direction of the all-terrain vehicle 100, the distance between the rightmost end of the left footrest serrations projection 2711a and the rotation center of the drive pulley 1521 is in the range from 60 mm to 300 mm. The distance between the leftmost end of the right footrest serrations projection 2721a and the rotation center of the magneto 157 is in the range from 60 mm to 300 mm.

In an embodiment, a distance between the rightmost end of the left footrest serrations projection 2711a and a leftmost end of the drive pulley 1521 is greater than 0 and not greater than 150 mm, and a distance between the rightmost end of the right footrest serrations projection 2721a and a rightmost end of the magneto 157 is greater than 0 and not greater than 150 mm It should be noted that the distance between the rightmost end of the left footrest serrations projection 2711a and the leftmost end of the drive pulley 1521 is in the range from 40 mm to 110 mm, and the distance between the rightmost end of the right footrest serrations projection 2721a and the rightmost end of the magneto 157 is in the range from 40 mm to 110 mm. Further, the distance between the rightmost end of the left footrest serrations projection 2711a and the leftmost end of the drive pulley 1521 is in the range from 60 mm to 90 mm, and the distance between the rightmost end of the right footrest serrations projection 2721a and the rightmost end of the magneto 157 is in the range from 60 mm to 90 mm. These arrangements optimize the layout of the engine 151, position the engine 151 more centrally within the all-terrain vehicle 100, and make the cylinder heads 1514 face rearward effectively, thereby keeping engine heat away from the rider and enhancing user experience.

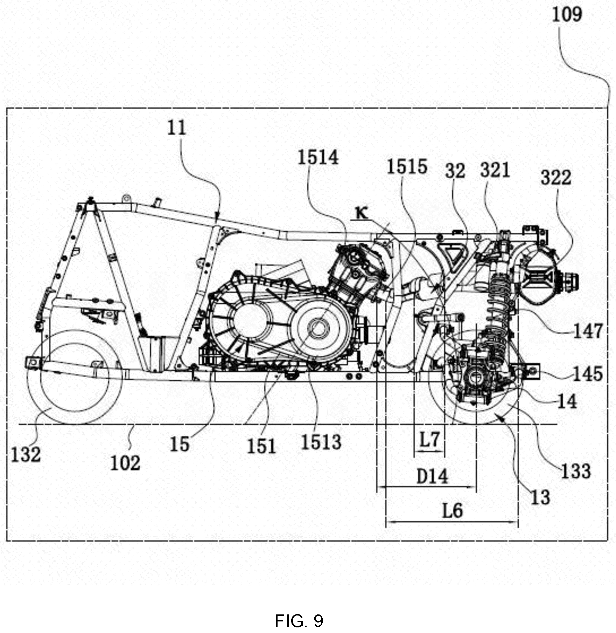

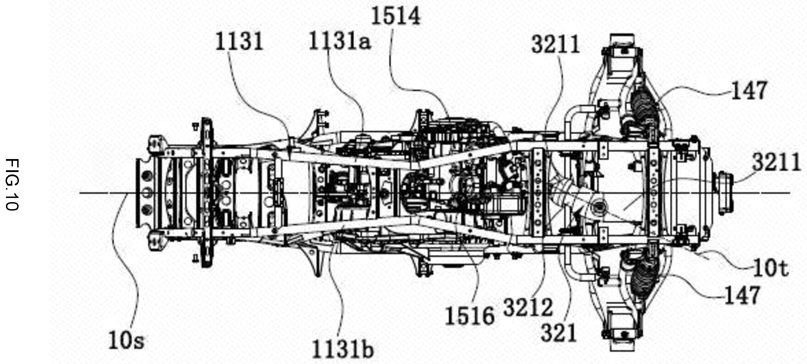

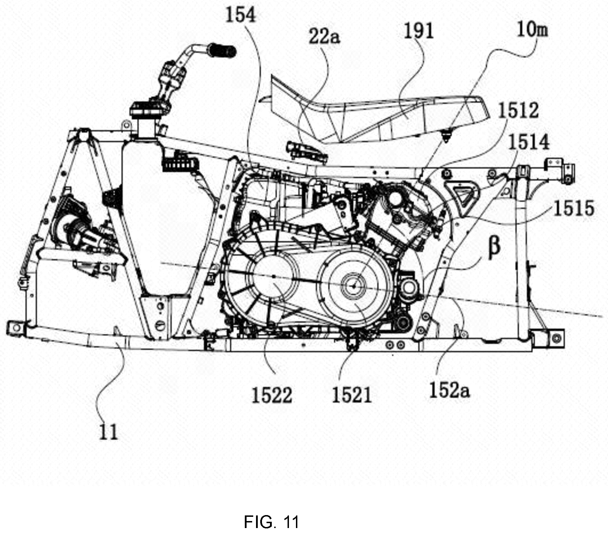

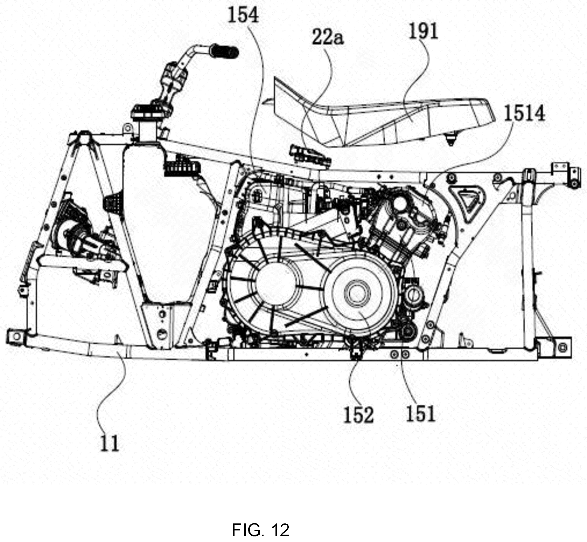

As shown in FIG. 9 to FIG. 12, the traveling system 13 includes a rear wheel 133, and the suspension system 14 connects the rear wheel 133 to the frame 11. The prime power assembly 15 is supported by the frame 11 and is connected to the rear wheel 133 in a transmission mode to drive the rear wheel 133 to move. The all-terrain vehicle 100 further includes an exhaust assembly 32 used to deliver and discharge exhaust gas generated by the prime power assembly 15.

The prime power assembly 15 includes the engine 151, and the engine 151 is connected to the rear wheel 133 in a transmission mode to drive the rear wheel 133 to rotate. Optionally, the engine 151 includes an exhaust passage 1515 used to discharge exhaust gas generated when the engine 151 operates and deliver the exhaust gas to the exhaust assembly 32.

More Optionally, the exhaust assembly 32 includes an exhaust pipe 321 and a muffler 322. The exhaust pipe 321 is used to deliver exhaust gas, and the muffler 322 is used to reduce noise generated when the exhaust pipe 321 delivers exhaust gas. The exhaust pipe 321 is connected to the exhaust passage 1515, and the muffler 322 is connected to the exhaust pipe 321.

In an embodiment, an opening of the exhaust passage 1515 is oriented toward the rear of the all-terrain vehicle 100. Therefore, the exhaust pipe 321 connected to the exhaust passage 1515 can be routed directly rearward, which helps shorten the overall length of the exhaust pipe 321 and reduce cost. This arrangement is also conducive to reducing the space occupation of the exhaust pipe 321 within the all-terrain vehicle 100, thereby providing more layout space for other components, avoiding interference with assembly of other components, and improving structural compactness.

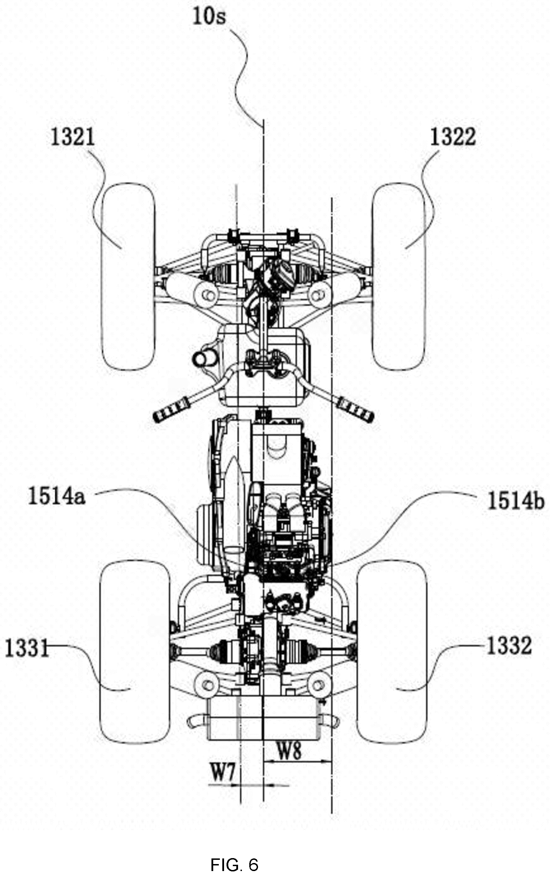

In addition, in the present application, since the exhaust gas generated by the engine 151 contains a large amount of heat, routing the exhaust pipe 321 rearward and shortening its length shortens the flow path of exhaust gas in the all-terrain vehicle 100, reduces heat transfer in the all-terrain vehicle 100, lowers the overall temperature, and improves riding comfort of the all-terrain vehicle 100. Further, in the present disclosure, because the saddle assembly 19 (see FIG. 6) is located forward of the exhaust passage 1515, the rearward routing of the exhaust pipe 321 keeps the exhaust pipe 321 away from the saddle assembly 19 and further reduces heat transfer from the exhaust gas in the exhaust pipe 321 to the saddle assembly 19, thereby further improving the riding comfort of the all-terrain vehicle 100.

In an embodiment, a normal projection of the exhaust passage 1515 on a reference plane 10r is an exhaust projection 1515a, and a normal projection of an axis of the rear wheel 133 on the reference plane 10r is a rear-axle projection line 133a. A minimum distance D14 between the exhaust projection 1515a and the rear-axle projection line 133a is in the range from 250 mm to 400 mm. Optionally, the minimum distance D14 between the exhaust projection 1515a and the rear-axle projection line 133a is in the range from 300 mm to 350 mm. More optionally, the minimum distance D14 between the exhaust projection 1515a and the rear-axle projection line 133a is 325 mm. With this arrangement, the minimum distance D14 between the exhaust projection 1515a and the rear-axle projection line 133a is prevented from being too small, which would otherwise cause the exhaust passage 1515 to be too rearward and further cause the engine 151 to be too rearward. Thus, interference between the engine 151 and components located at a rear portion of the frame 11 can be avoided, thereby improving operating stability of the components at the rear portion of the frame 11. In addition, this arrangement can also prevent the minimum distance D14 between the exhaust projection 1515a and the rear-axle projection line 133a from being excessively large, which cause the need to arrange an excessively long exhaust pipe 321, thereby advantageously shortening the overall length of the exhaust pipe 321, preventing the exhaust pipe 321 from interfering with the assembly of other components, and thus improving the structural compactness of the exhaust pipe 321. Meanwhile, an excessively long exhaust pipe 321 can be avoided so as to avoid excessive heat transfer of the exhaust gas in the all-terrain vehicle 100, thereby lowering the overall temperature of the all-terrain vehicle 100 and improving riding comfort of the all-terrain vehicle 100.

In an embodiment, the exhaust pipe 321 extends rearward in the length direction of the frame 11, and the exhaust pipe 321 is divided by the longitudinal center plane 10s. Thus, the exhaust pipe 321 is centrally arranged in the width direction of the all-terrain vehicle 100, thereby avoiding a situation in which the exhaust pipe 321 is biased toward one side and causes an excessively high local temperature. In other words, gaps are maintained between the exhaust pipe 321 and both widthwise sides of the all-terrain vehicle 100, and the gaps can block part of the heat dissipated by the exhaust pipe 321, thereby reducing the overall heat of the all-terrain vehicle 100. In addition, the centrally arranged exhaust pipe 321 is also beneficial to shortening the routing path of the exhaust pipe 321 in the all-terrain vehicle 100, thereby shortening the overall length of the exhaust pipe 321.

In an embodiment, in the length direction of the all-terrain vehicle 100, a length L6 of the exhaust pipe 321 is in the range from 350 mm to 600 mm. Optionally, the length L6 of the exhaust pipe 321 is in the range from 400 mm to 550 mm. More optionally, the length L6 of the exhaust pipe 321 is in the range from 450 mm to 500 mm. This arrangement can prevent the exhaust pipe 321 from being excessively long, which may interfere with the assembly of other components, thereby facilitating improving structural compactness of the exhaust pipe 321. At the same time, the length L6 of the exhaust pipe 321 is prevented from being excessively long and causing excessive heat transfer from exhaust gas in the exhaust pipe 321 within the all-terrain vehicle 100, thereby lowering the overall temperature of the all-terrain vehicle 100 and improving riding comfort of the all-terrain vehicle 100.

When viewed in the height direction of the all-terrain vehicle 100, the exhaust pipe 321 is disposed between the left upper main beam 1131a and the right upper main beam 1131b. The suspension system 14 includes a rear rocker arm 145 and a shock absorber 147. The rear rocker arm 145 connects the rear wheels 133 to the frame 11, and two ends of the shock absorber 147 are respectively connected to the rear rocker arm 145 and the frame 11, so that the shock absorber 147 can dampen vibration for the rear rocker arm 145. Optionally, when viewed in the width direction of the all-terrain vehicle 100, the shock absorber 147 at least partially overlaps the exhaust pipe 321. This arrangement avoids assembly interference between the exhaust pipe 321 and the shock absorber 147. In addition, this arrangement can prevent the exhaust pipe 321 from occupying a layout space above the shock absorber 147 and causing the layout space of the shock absorber 147 to be reduced, thereby facilitating the arrangement of a large-volume shock absorber 147, thereby improving shock absorbing effect of the shock absorber 147 and the comfort of the all-terrain vehicle 100.

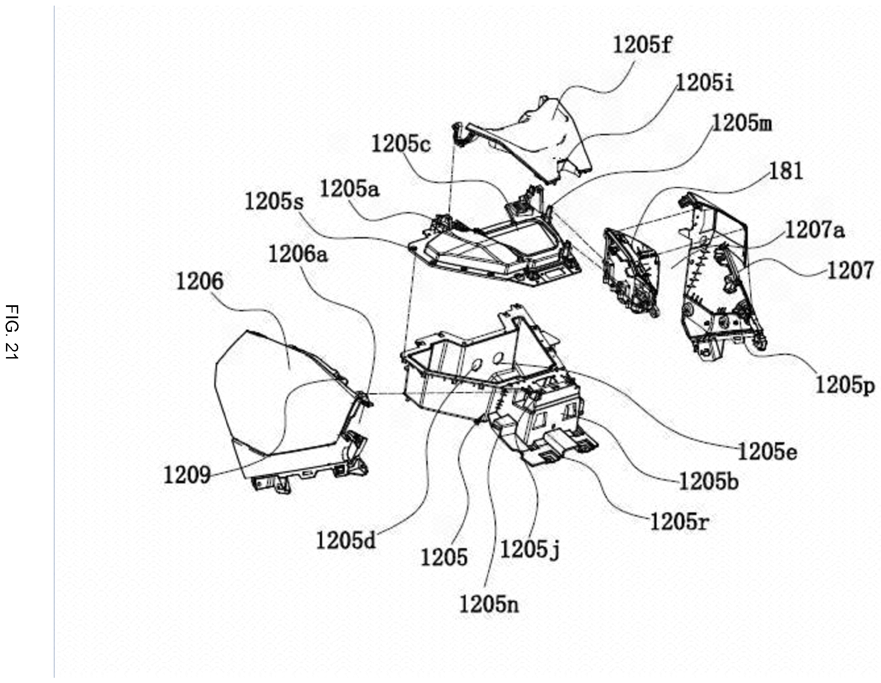

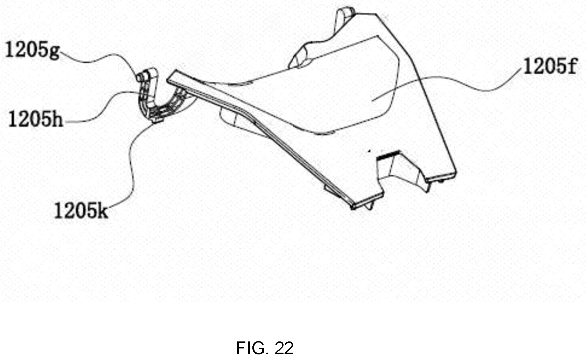

As shown in FIG. 21 and FIG. 22, the vehicle body cover 12 further includes a first side cover 1206 and a second side cover 1207. Optionally, a storage box assembly 1205, the first side cover 1206 and the second side cover 1207 are each at least partially supported by the frame 11. In the length direction of the frame 11, the storage box assembly 1205, the first side cover 1206 and the second side cover 1207 are each at least partially located between the front mudguard 126 and the saddle assembly 19. The first side cover 1206 and the second side cover 1207 are distributed on two sides of the storage box assembly 1205 in the width direction of the frame 11. The first side cover 1206 and the front mudguard 126 define a first space 1206a, and the second side cover 1207 and the front mudguard 126 define a second space 1207a. With this arrangement, the first space 1206a and the second space 1207a provide a layout space for components, thereby facilitating improvement of the space utilization at the first cover side cover 1206 and the second cover side cover 1207.

More optionally, the storage box assembly 1205 is at least partially located in the first space 1206a and/or the second space 1207a. With this arrangement, the storage box assembly 1205 can utilize the layout space provided by the first space 1206a and/or the second space 1207a, thereby increasing the space occupied by the storage box assembly 1205, increasing its storage volume and improving storage performance of the all-terrain vehicle 100.

In an embodiment, the volume of the storage box assembly 1205 is in the range from 6 L to 10 L. Optionally, the volume of the storage box assembly 1205 is in the range from 7 L to 9 L. More Optionally, the storage box assembly 1205 has a volume of 8 L. This arrangement can prevent the storage box assembly 1205 from being excessively large, which may interfere with the assembly of other components located in the first space 1206a and the second space 1207a, thereby facilitating improvement of the space utilization rate of the first space 1206a and the second space 1207a, and can also prevent the storage box assembly 1205 from being excessively small, which may decrease its storage volume, thereby improving storage performance of the all-terrain vehicle 100.

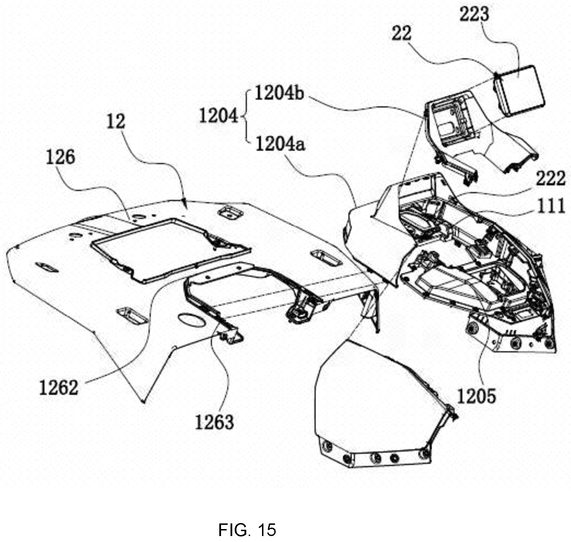

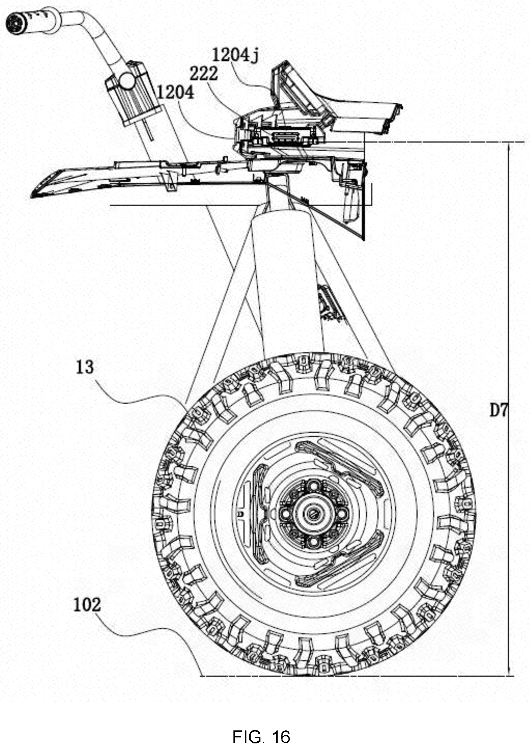

As shown in FIG. 15 and FIG. 16, the electrical assembly 22 includes a body control module (BCM) 222 and a dashboard 223. The body control module 222 is used to control electronic devices of the all-terrain vehicle 100, and the dashboard 223 is used to display vehicle information.

Optionally, the vehicle body cover 12 includes a dashboard mounting cover 1204. The dashboard 223 and the body control module 222 are mounted on the dashboard mounting cover 1204, and the body control module 222 is located below the dashboard 223. Optionally, a minimum distance D7 between the body control module 222 and the reference plane 102 in the height direction of the frame 11 is in the range from 850 mm to 1270 mm. More Optionally, the minimum distance D7 between the body control module 222 and the reference plane 102 in the height direction of the frame 11 is in the range from 950 mm to 1170 mm. Further, the minimum distance D7 between the body control module 222 and the reference plane 102 in the height direction of the frame 11 is 1028 mm. With this arrangement, the minimum distance D7 between the body control module 222 and the reference plane 102 in the height direction of the frame 11 can be prevented from being excessively small and causing the body control module 222 to be too close to the reference plane 102, thereby avoiding damage caused by contact with water when the vehicle wades, thereby improving the protection of the body control module 222. In addition, this arrangement can also prevent the minimum distance D7 between the body control module 222 and the reference plane 102 in the height direction of the frame 11 from being excessively large, which may cause an excessively high center of gravity of the body control module 222, thereby avoiding unstable operation of the all-terrain vehicle 100 and improving the riding stability of the all-terrain vehicle 100.

In an embodiment, the dashboard mounting cover 1204 includes a dashboard front cover 1204a and a dashboard upper cover 1204b. Optionally, the dashboard front cover 1204a is at least partially located forward of the dashboard upper cover 1204b. The dashboard upper cover 1204b is located on and connected to the dashboard front cover 1204a, and the dashboard 223 is mounted on the dashboard upper cover 1204b. More optionally, after the dashboard upper cover 1204b and the dashboard front cover 1204a are connected, an accommodation space 1204j is defined, and body control module 222 is disposed in the accommodation space1204j. With this arrangement, the space between the dashboard upper cover 1204b and the dashboard front cover 1204a is efficiently utilized, so that the body control module 222 can be arranged using the space between the dashboard upper cover 1204b and the dashboard front cover 1204a, thereby improving the structural compactness of the body control module 222 relative to the dashboard upper cover 1204b and the dashboard front cover 1204a.

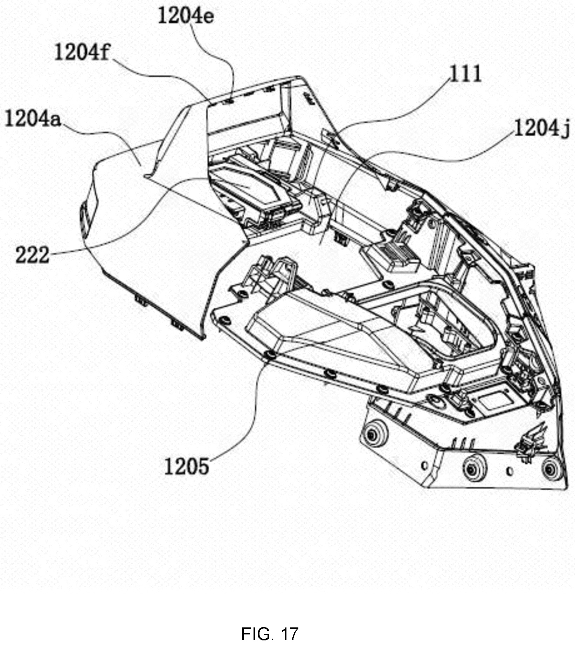

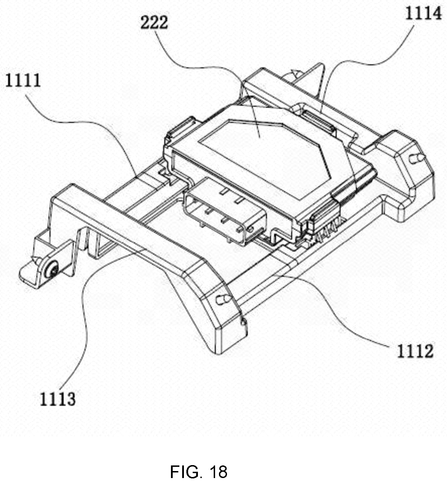

As shown in FIG. 17 and 18, the frame 11 includes a support frame 111 located in the accommodation space 1204j. The support frame 111 connects the dashboard front cover 1204a and the dashboard upper cover 1204b and is used to support the dashboard front cover 1204a and the dashboard upper cover 1204b. With this arrangement, the support frame 111 limits the relative position between the dashboard front cover 1204a and the dashboard upper cover 1204b, thereby improving connection stability of the dashboard front cover 1204a and the dashboard upper cover 1204b, thereby improving the strength after the connection of the dashboard front cover 1204a and the dashboard upper cover 1204b, thereby improving the structural stability of the all-terrain vehicle 100.

In addition, the body control module 222 is mounted on the support frame 111, so that additional mounting points for fixing the body control module 222 on the frame 11 can be reduced, thereby facilitating simplification of the structure of the frame 11.

As shown in FIG. 18, the support frame 111 includes a front transverse rod 1111, a rear transverse rod 1112, a left longitudinal rod 1113 and a right longitudinal rod 1114. Two ends of the left longitudinal rod 1113 are respectively connected to one end of the front transverse rod 1111 and one end of the rear transverse rod 1112. Two ends of the right longitudinal rod 1114 are respectively connected to the other end of the front transverse rod 1111 and the other end of the rear transverse rod 1112. Two ends of the front transverse rod 1111 are connected to the dashboard front cover 1204a. Rear ends of the left longitudinal rod 1113 and the right longitudinal rod 1114 are connected to the dashboard upper cover 1204b. With this arrangement, through the connection between the front transverse rod 1111, the rear transverse rod 1112, the left longitudinal rod 1113, and the right longitudinal rod 1114, the support frame 111 can be formed into a frame structure, which is beneficial to enhancing the support for the dashboard mounting cover 1204, and further improving the structural stability of the dashboard mounting cover 1204.

In an embodiment, the body control module 222 is mounted on the front transverse rod 1111 and the rear transverse rod 1112, and also on at least one of the left longitudinal rod 1113 and the right longitudinal rod 1114. With this arrangement, while connection stability between the body control module 222 and the support frame 111 is ensured, the body control module 222 can avoid other components on the support frame 111, thereby improving structural compactness at the support frame 111.

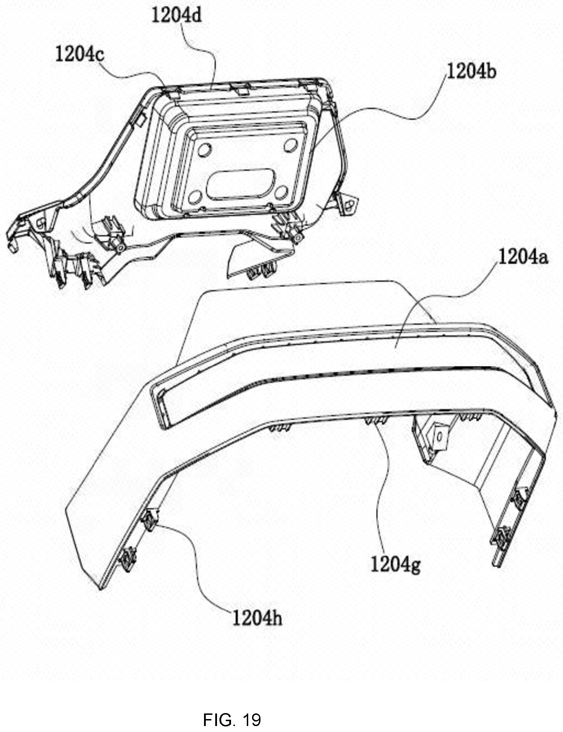

As shown in FIG. 19, the dashboard upper cover 1204b is provided with a hook structure 1204c and a first insertion structure 1204d, both located at a front portion of the dashboard upper cover 1204b. Optionally, the dashboard front cover 1204a is provided with an insertion groove 1204e and a snap-fit portion 1204f. The insertion groove 1204e is used to be inserted and mated with the first insertion structure 1204d, and the first insertion structure 1204d abuts against a groove bottom of the insertion groove 1204e. With this arrangement, during assembly of the dashboard upper cover 1204b and the dashboard front cover 1204a, the relative position between the dashboard upper cover 1204b and the dashboard front cover 1204a can be limited, excessive assembly can be avoided, and assembly accuracy can be improved.

More optionally, the snap-fit portion 1204f is used to be snap-fitted to the hook structure 1204c. With this arrangement, the connection between the dashboard upper cover 1204b and the dashboard front cover 1204a can be realized by the cooperation of the snap-fit portion 1204f and the hook structure 1204c, so that the detachment of the dashboard upper cover 1204b and the dashboard front cover 1204a can be prevented, thereby improving the connection stability between the dashboard upper cover 1204b and the dashboard front cover 1204a.

With the above arrangement, the abutment between the first insertion structure 1204d and the insertion groove 1204e can simplify the assembly process of the dashboard upper cover 1204b and the dashboard front cover 1204a, thereby improving the assembly efficiency. Moreover, the above snap-fit manner facilitates assembly and disassembly between the dashboard upper cover 1204b and the dashboard front cover 1204a, thereby further simplifying the assembly process of the dashboard upper cover 1204b and the dashboard front cover 1204a and further improving assembly efficiency.

In an embodiment, the dashboard front cover 1204a further at least partially surrounds two sides of the dashboard upper cover 1204b in the width direction of the frame 11, and the two sides of the dashboard upper cover 1204b in the width direction of the frame 11 are fixedly connected to the dashboard front cover 1204a. In some embodiments, two sides of the dashboard upper cover 1204b in the width direction of the frame 11 are fixedly connected to the dashboard front cover 1204a by bolts, thereby facilitating improvement of the connection stability of the dashboard front cover 1204a and the dashboard upper cover 1204b.

As shown in FIG. 17, the vehicle body cover 12 further includes the storage box assembly 1205, which is at least partially supported by the frame 11 and is used to improve storage performance of the all-terrain vehicle 100. The storage box assembly 1205 is at least partially located behind the dashboard upper cover 1204b, and the dashboard upper cover 1204b is snap-fitted with the storage box assembly 1205. This arrangement avoids additional arrangement of mounting points for fixing the storage box assembly 1205 on the frame 11, thereby facilitating simplification of the structure of the frame 11.

As shown in FIG. 15, the dashboard upper cover 1204b is snap-fitted with the storage box assembly 1205 by A-type clips. With this arrangement, the A-type clip is a A-shaped plastic or metal clip, which can be disassembled and assembled with hands, thereby facilitating the disassembly and assembly process of the dashboard upper cover 1204b and the storage box assembly 1205, and further facilitating the improvement of the assembly efficiency of the dashboard upper cover 1204b and the storage box assembly 1205. In addition, the A-type clip can be used multiple times, thereby facilitating repeated disassembly and assembly of the dashboard upper cover 1204b and the storage box assembly 1205, and further facilitating later disassembly and maintenance of the dashboard upper cover 1204b and the storage box assembly 1205.

As shown in FIG. 15 and FIG. 19, the vehicle body cover 12 further includes the front mudguard 126. The front mudguard 126 prevents splashed mud and gravel from entering the all-terrain vehicle 100 and protects internal components. The dashboard front cover 1204a is mounted on the front mudguard 126. Optionally, the dashboard front cover 1204a is provided with a second insertion structure 1204g and a snap-fit portion 1204h. The second insertion structure 1204g is located at a front portion of the dashboard front cover 1204a, and the snap-fit portion 1204h is located on two sides of the dashboard front cover 1204a in the width direction of the frame 11. The front mudguard 126 defines an insertion port 1262 and a snap-fit port 1263. The insertion port 1262 is used to be inserted and mated with the second insertion structure 1204g. With this arrangement, positioning can be provided during assembly of the front mudguard 126 and the dashboard front cover 1204a, and pre-positioning can also be provided during the assembly process, thereby simplifying of the assembly process of the front mudguard 126 and the dashboard front cover 1204a.

More optionally, the snap-fit port 1263 is used to be snap-fitted to the snap-fit portion 1204h. In some embodiments, the snap-fit portion 1204h is an A-type clip, which is beneficial to simplifying the disassembly and assembly process of the front mudguard 126 and the dashboard front cover 1204a, thereby improving the assembly efficiency of the front mudguard 126 and the dashboard front cover 1204a. The arrangement also facilitates assembly, disassembly, and maintenance of the front mudguard 126 and the dashboard front cover 1204a.

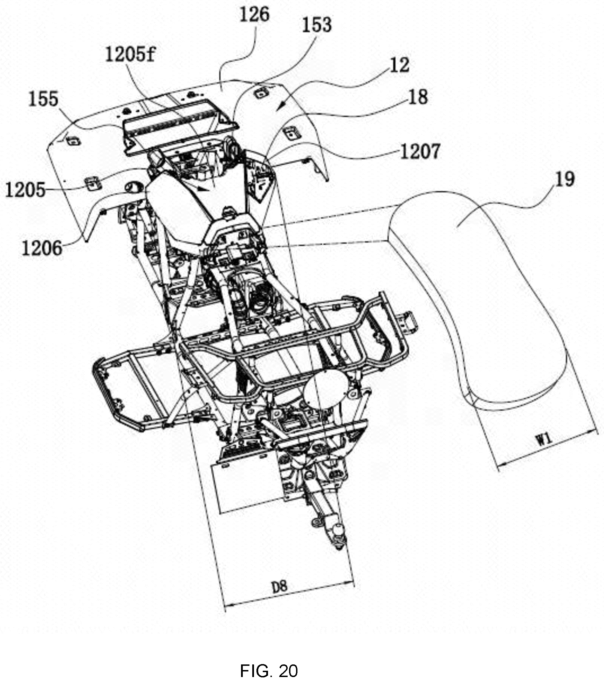

As shown in FIG. 20, the prime power assembly 15 further includes an air filter intake conduit 155 and a transmission intake conduit 153. The air filter intake conduit 155 is connected to an air filter mechanism 154 and is used to deliver air to the air filter mechanism 154. The transmission intake conduit 153 is connected to the transmission mechanism 152 and is used to provide gas to the transmission mechanism 152. Optionally, when viewed from the height direction of the frame 11, the storage box assembly 1205 at least partially overlaps the air filter intake conduit 155, and the storage box assembly 1205 at least partially overlaps the transmission intake conduit 153. With this arrangement, structural compactness at the storage box assembly 1205 can be improved.

As shown in FIG. 20 and FIG. 21, a maximum distance D8 between the first side cover 1206 and the second side cover 1207 in the width direction of the frame 11 is larger than a maximum width D5 of the saddle assembly 19 in the width direction of the frame 11. With this arrangement, the volumes of the first space 1206a and the second space 1207a can be increased, thereby facilitating arrangement of a larger storage box assembly 1205 in the first space 1206a and/or the second space 1207a and increasing the storage volume of the storage box assembly 1205.

In one embodiment, the storage box assembly 1205 includes an upper box body 1205a and a lower box body 1205b, and the upper box body 1205a is fixedly connected to the lower box body 1205b. Optionally, the upper box 1205a defines a storage opening 1205c. With this arrangement, objects can be placed into and taken out of the storage box assembly 1205 through the storage opening 1205c. More optionally, the upper box body 1205a and the lower box body 1205b are each at least partially located in the first space 1206a and/or the second space 1207a. When viewed in the height direction of the frame 11, the storage opening 1205c does not overlap the first space 1206a and does not overlap the second space 1207a. With this arrangement, the first side cover 1206 at the first space 1206a and the second side cover 1207 at the second space 1207a can be prevented from interfering with taking objects through the storage opening 1205c, thereby improving convenience of use of the storage box assembly 1205.

In addition, by dividing the storage box assembly 1205 into the upper box body 1205a and the lower box body 1205b, storage spaces can be respectively processed inside the upper box body 1205a and the lower box body 1205b. This avoids a situation in which, when the storage box assembly 1205 is formed as an integral structure, a large storage space cannot be processed inside the storage box assembly 1205. With the above arrangement, the making process for the internal storage space of the storage box assembly 1205 can be simplified, and the volume of the internal storage space of the storage box assembly 1205 can also be increased.

As shown in FIG. 21, the lower box body 1205b defines a first through hole 1205d and a second through hole 1205e, and the first through hole 1205d and the second through hole 1205e are defined at a front portion of the lower box body 1205b. The first through hole 1205d is used to fix a cigarette lighter, and the second through hole 1205e is used to fix a USB connector.

As shown in FIG. 21 and FIG. 22, the storage box assembly 1205 includes a storage lid 1205f pivotally connected to the upper box body 1205a and is used to cover the storage opening 1205c. With this arrangement, the storage lid 1205f can cover the storage opening 1205c, so that during travel of the all-terrain vehicle 100, objects inside the storage box assembly 1205 can be prevented from falling out from the storage opening 1205c, thereby improving storage safety of the storage box assembly 1205.

Optionally, one side of the storage lid 1205f has a pivot shaft 1205g and an extension portion 1205h. The extension portion 1205h is substantially U-shaped, the pivot shaft 1205g is located at an end of the extension portion 1205h away from the storage lid 1205f, and the pivot shaft 1205g is pivotally connected to the upper box body 1205a. With this arrangement, opening and closing of the storage cover 1205f can be realized by the pivot shaft 1205g. In addition, the U-shaped extension portion 1205h can prevent the extension portion 1205h from interfering with other components during pivotal movement of the storage lid 1205f, so that the storage lid 1205f can be normally opened and closed.

More optionally, a side of the storage lid 1205f away from the extension portion 1205h has a lid connecting portion 1205i. The lower box body 1205b at least partially extends upward to form a fixing boss 1205j, the fixing boss 1205j is disposed at the rear portion of the lower box body 1205b, and the lid connecting portion 1205i is capable of passing through the fixing boss 1205j and being snap-fitted to the fixing boss 1205j. With this arrangement, opening and closing between the storage lid 1205f and the upper box body 1205a is facilitated, thereby improving convenience of use of the storage box assembly 1205.

In one embodiment, the extension portion 1205h is provided with a position limiting portion 1205k. The position limiting portion 1205k is used to limit a pivot angle of the storage lid 1205f relative to the upper box body 1205a, thereby preventing the storage lid 1205f from pivoting excessively and interfering with other components on the all-terrain vehicle 100.

Optionally, when the storage lid 1205f covers the storage opening 1205c, two sides of the storage lid 1205f in the width direction of the frame 11 can respectively fit against the first side cover 1206 and the second side cover 1207 (see FIG. 20). With this arrangement, flatness between the storage lid 1205f and the first and second side covers 1206 and 1207 can be improved, thereby improving riding comfort of the all-terrain vehicle 100. In addition, wind resistance at the storage lid 1205f can be reduced, thereby reducing wind resistance of the all-terrain vehicle 100 and reducing energy consumption of the all-terrain vehicle 100.

As shown in FIG. 21, the storage box assembly 1205 is at least partially located in the first space 1206a. The all-terrain vehicle 100 further comprises a gear shift assembly 18, the gear shift assembly 18 is at least partially located in the second space 1207a, and the gear shift assembly 18 is connected to the second side cover 1207. With this arrangement, interference between the storage box assembly 1205 and the gear shift assembly 18 can be avoided, and the space utilization of the first space 1206a and the second space 1207a can be improved, thereby improving structural compactness in the first space 1206a and the second space 1207a. Optionally, the gear shift assembly 18 is used as an electronic shifter 181. The electronic shifter 181 can improve shift response speed, thereby improving handling performance of the all-terrain vehicle 100.

In one embodiment, the gear shift assembly 18 is snap-fitted with the second side cover 1207 and fixedly connected by a fastener. With this arrangement, mounting stability of the gear shift assembly 18 in the second space 1207a can be improved. In addition, the gear shift assembly 18 is fixedly connected to the storage box assembly 1205, thereby further improving mounting stability of the gear shift assembly 18 in the second space 1207a.

Optionally, a side of the storage box assembly 1205 close to the second side cover 1207 at least partially extends upward to form a mounting post 1205m, and a fastener passes through the gear shift assembly 18 and is fixedly connected to the mounting post 1205m. In some embodiments, a side of the upper box body 1205a close to the second side cover 1207 at least partially extends upward to form the mounting post 1205m. The mounting post 1205m is a boss post, and the fastener is a screw. With this arrangement, the screw passes through the gear shift assembly 18 and is threadedly connected to the boss post, thereby fixedly connecting the gear shift assembly 18 to the upper box body 1205a and improving connection stability between the gear shift assembly 18 and the upper box body 1205a.

As shown in FIG. 21, two sides of the storage box assembly 1205 in the width direction of the frame 11 are provided with mounting bosses 1205n. Further, a side of the first side cover 1206 close to the storage box assembly 1205 and a side of the second side cover 1207 close to the storage box assembly 1205 are each provided with a clip structure 1205p. The clip structures 1205p pass through the mounting bosses 1205n and are snap-fitted with the mounting bosses 1205n. With this arrangement, the snap-fit connection can simplify the assembly process between the storage box assembly 1205 and the first side cover 1206 and the second side cover 1207, thereby improving assembly efficiency of the storage box assembly 1205.

In the present embodiment, the clip structure 1205p is an A-type clip. With this arrangement, the A-type clips can be disassembled and assembled with bare hands, thereby further simplifying the assembly process between the storage box assembly 1205 and the first side cover 1206 and the second side cover 1207 and improving assembly efficiency of the storage box assembly 1205.

In some embodiments, the lower box body 1205b is provided with the mounting bosses 1205n on two sides in the width direction of the frame 11. In the present embodiment, the lower box body 1205b bears the weight of objects, and the lower box body 1205b is connected to the first side cover 1206 and the second side cover 1207 through the mounting bosses 1205n, thereby improving overall mounting stability of the storage box assembly 1205.

In one embodiment, two sides of the storage box assembly 1205 in the width direction of the frame 11 are further provided with box mounting holes 1205s. A side of the first side cover 1206 close to the storage box assembly 1205 and a side of the second side cover 1207 close to the storage box assembly 1205 are each provided with a side-cover mounting hole 1209. A fastener passes through the box mounting holes 1205s and the side-cover mounting holes 1209 to fix the storage box assembly 1205, the first side cover 1206 and the second side cover 1207. In some embodiments, the fastener may be a bolt. The fastener can further improve connection stability between the storage box assembly 1205 and the first side cover 1206 and the second side cover 1207.

In some embodiments, the upper box body 1205a defines the mounting holes 1205s on two sides in the width direction of the frame 11. In the height direction of the frame 11, the side-cover mounting holes 1209 are defined at upper portions of the first side cover 1206 and the second side cover 1207. With this arrangement, both the box mounting holes 1205s and the side-cover mounting holes 1209 are located above the lower box body 1205b, so that the lower box body 1205b is prevented from interfering with assembly of the box mounting holes 1205s and the side-cover mounting holes 1209, thereby improving assembly convenience of the storage box assembly 1205 with the first side cover 1206 and the second side cover 1207.

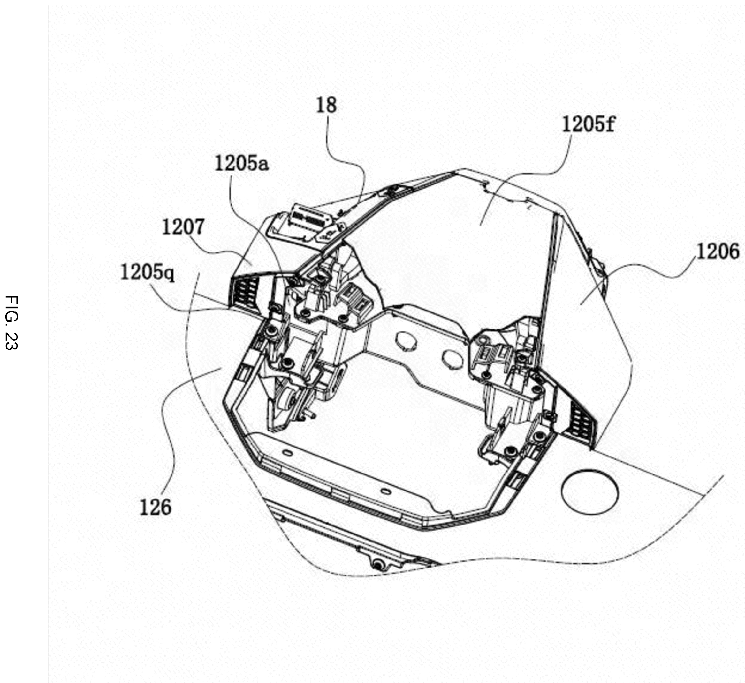

As shown in FIG. 21 and FIG. 23, the storage box assembly 1205 is provided with a front fixing portion 1205q and a rear fixing portion 1205r. The front fixing portion 1205q is fixedly connected to the front mudguard 126, and the rear fixing portion 1205r is fixedly connected to the frame 11. With this arrangement, connection stability of the storage box assembly 1205 in the all-terrain vehicle 100 can be further improved, so that the storage box assembly 1205 can store heavier objects, thereby improving storage performance of the storage box assembly 1205.

In some embodiments, the lower box 1205b is provided with the front fixing portion 1205q and the rear fixing portion 1205r. The front fixing portion is fixedly connected to the front mudguard 126 by a screw, and the rear fixing portion 1205r is fixedly connected to the frame 11 by a screw. In the present embodiment, the lower box body 1205b bears the weight of objects. By connecting the lower box body 1205b to the front mudguard 126 and the frame 11, the load-bearing capacity of the lower box body 1205b can be improved, so that heavier objects can be stored in the storage box assembly 1205 and the storage effect of the storage box assembly 1205 can be improved.

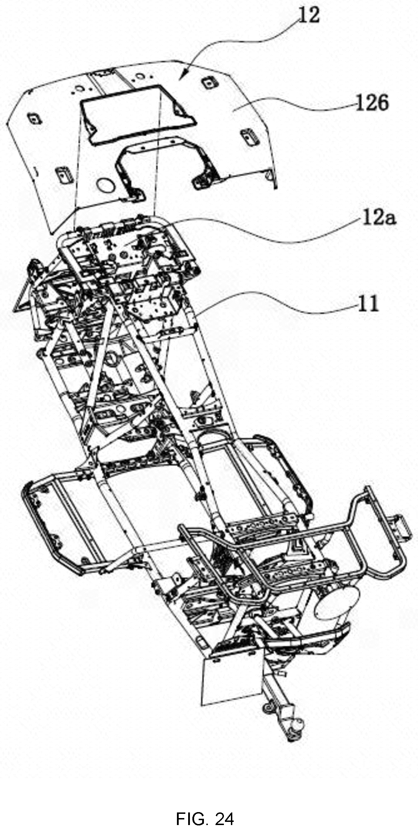

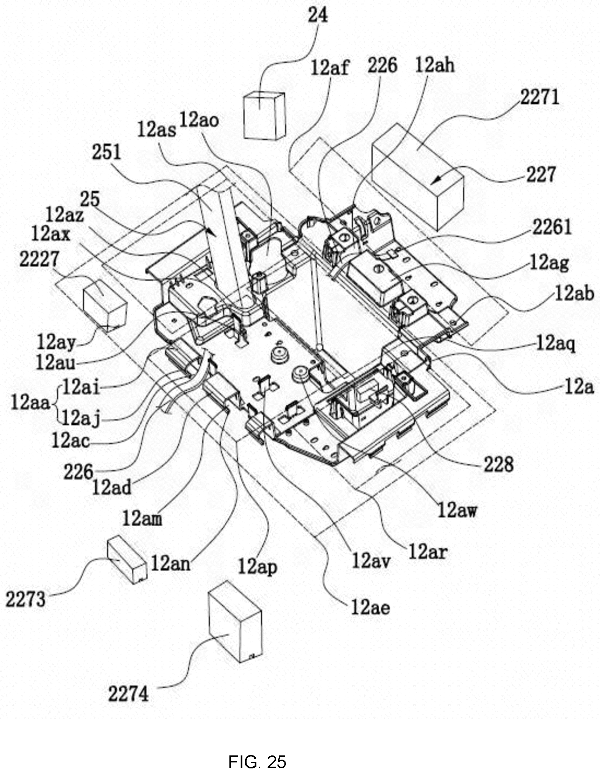

As shown in FIG. 24 and FIG. 25, the vehicle body cover 12 includes an electrical mounting plate 12a. The electrical mounting plate 12a is supported by the frame 11 and is used to carry at least part of the electrical assembly 22. Optionally, the electrical mounting plate 12a is located below the front mudguard 126. The electrical mounting plate 12a is provided with hook structures 12aa and fixing portions 12ab. The hook structures 12aa are snap-fitted with the frame 11, and the fixing portions 12ab are fixedly connected to the frame 11. With this arrangement, snap-fit connection between the electrical mounting plate 12a and the frame 11 is realized by the hook structures 12aa, thereby reducing mounting points on the electrical mounting plate 12a for fixing the electrical mounting plate 12a to the frame 11, reducing the number of screws cooperating with the mounting points, and reducing production cost of the all-terrain vehicle 100. The snap-fit manner also simplifies the assembly process between the electrical mounting plate 12a and the frame 11, improves assembly efficiency, and facilitates assembly and disassembly between the electrical mounting plate 12a and the frame 11 for later maintenance. Each hook structure 12aa includes a hook body 12ai and a hook portion 12aj, and the hook body 12ai and the hook portion 12aj are integrally formed. Optionally, an opening 12am is defined between the hook portion 12aj and the electrical mounting plate 12a, and the frame 11 passes through the opening 12am and is snap-fitted with the hook structure 12aa. In some embodiments, the hook body 12ai and the hook portion 12aj are elastic, and the frame 11 passes through the opening 12am and is interference-fitted with the hook structure 12aa, so that the frame 11 is snap-fitted with the hook structure 12aa without fastening screws, thereby simplifying the assembly process between the electrical mounting plate 12a and the frame 11 and improving assembly efficiency.

As shown in FIG. 25, a guide portion 12an is formed at the hook portion 12aj near the opening 12am, and a bending direction of the guide portion 12an is opposite to a bending direction of the hook portion 12aj. With this arrangement, when the frame 11 passes through the opening 12am during assembly, the guide portion 12an can guide the frame 11, thereby avoiding interference between the hook portion 12aj and the frame 11 that would otherwise prevent the frame 11 from entering the opening 12am for snap-fitting, and improving assembly efficiency between the hook structure 12aa and the frame 11.

In one embodiment, the electrical assembly 22 includes a connecting harness 226, and the connecting harness 226 is used for signal and energy transmission. Optionally, in the present application, a plurality of hook structures 12aa are provided, and gaps 12ac are formed between the plurality of hook structures 12aa. The gaps 12ac are used to avoid the connecting harness 226. With this arrangement, the gaps 12ac can prevent the hook structures 12aa from interfering with the connecting harness 226, and can avoid a situation in which the connecting harness 226 needs to be routed around the hook structures 12aa. Therefore, structural compactness between the electrical mounting plate 12a and the connecting harness 226 can be improved.

In addition, with the above arrangement, the connecting harness 226 can be prevented from being lengthened due to avoidance of the hook structures 12aa, thereby shortening the overall length of the connecting harness 226.

As shown in FIG. 25, each hook structure 12aa forms a relief portion 12ad. The relief portion 12ad is used to avoid the front mudguard 126, so that an assembly clearance exists between the front mudguard 126 and the relief portion 12ad. With this arrangement, interference between the hook structure 12aa and the front mudguard 126 can be avoided, thereby facilitating assembly between the front mudguard 126 and the electrical mounting plate 12a.

In one embodiment, the electrical mounting plate 12a is provided with a first arrangement region 12ae and a second arrangement region 12af. In the length direction of the frame 11, the first arrangement region 12ae is located forward of the second arrangement region 12af. Optionally, the electrical assembly 22 includes electrical devices 227 and a connecting harness 226. The electrical devices 227 are located in the first arrangement region 12ae, and the connecting harness 226 is located in the second arrangement region 12af. With this arrangement, by dividing the electrical mounting plate 12a into the first arrangement region 12ae and the second arrangement region 12af, orderly arrangement of the electrical devices 227 and the connecting harness 226 on the electrical mounting plate 12a can be improved, thereby improving space utilization on the electrical mounting plate 12a.

As shown in FIG. 25, the first arrangement region 12ae includes a first region 12ap, a second region 12aq, a third region 12ar, and a fourth region 12as. In the length direction of the frame 11, the first region 12ap is located forward of the second region 12aq, and the third region 12ar and the fourth region 12as are distributed on two sides of the first region 12ap and the second region 12aq in the width direction of the frame 11. Optionally, the electrical devices 227 include a battery 2271, a telematics box (T-BOX) 2272, an on-board diagnostics (OBD) module 2273, a passive entry passive start (PEPS) module 2274, and a fuse box 228. The all-terrain vehicle 100 includes an oil cup 24 and a cooling assembly 25, and the cooling assembly 25 includes a radiator pipe 251. The battery 2271 is used to store and provide electric energy. The telematics box 2272 is used to collect and transmit data of the all-terrain vehicle 100. The on-board diagnostics module 2273 is used to monitor and diagnose faults of the all-terrain vehicle 100. The passive entry passive start module 2274 is used to unlock and start the all-terrain vehicle 100 without a conventional key. The oil cup 24 is used to store lubricating oil. The cooling assembly 25 is used to dissipate heat of the all-terrain vehicle 100. The radiator pipe 25 is used to deliver gas for the cooling assembly 25. The fuse box 228 is used to mount a fuse. More optionally, the telematics box 2272, the on-board diagnostics module 2273, and the passive entry passive start module 2274 are all located in the first region 12ap, the battery 2271 is mounted in the second region 12aq, the fuse box 228 is located in the third region 12ar, the oil cup 24 is mounted in the fourth region 12as, and the radiator pipe 25 extends through the fourth region 12as. With this arrangement, dividing the first arrangement region 12ae into the four regions described above can further improve orderly arrangement of the electrical devices 227 in those regions, thereby improving space utilization on the electrical mounting plate.

In one embodiment, the second region12aq is recessed downward to form a battery space 12at, and the battery 2271 is mounted in the battery space 12at. With this arrangement, the recess can increase the volume of the second region 12aq to form the battery space 12at, thereby improving mounting stability of the battery 2271 in the battery space 12at.

In one embodiment, the first region 12ap is provided with a first mounting portion 12au, a second mounting portion 12av and a third mounting portion 12aw. The first mounting portion 12au and the second mounting portion 12av are distributed in the width direction of the frame 11, and the third mounting portion 12aw is located behind the first mounting portion 12au. The first mounting portion 12au is connected to the passive entry passive start module 2274, the second mounting portion 12av is connected to the telematics box 2272, and the third mounting portion 12aw is connected to the on-board diagnostics module 2273. In some embodiments, the first mounting portion 12au, the second mounting portion 12av and the third mounting portion 12aw are each provided with a clip 12ax, and the passive entry passive start module 2274, the telematics box 2272 and the on-board diagnostics module 2273 are each provided with a clip groove 12ay configured to snap-fit with the clip 12ax. In this way, the assembly efficiency of the first mounting portion 12au with the passive entry passive start module 2274, the second mounting portion 12av with the telematics box 2272, and the third mounting portion 12aw with the on-board diagnostics module 2273 can be improved through clip connection, which is conducive to the rapid disassembly and assembly of the above-mentioned electrical components 227.

In one embodiment, the fourth region 12as is provided with a pipe hole 12az and an assembly hole 12ao. The oil cup 24 at least partially passes through the assembly hole 12ao and is mounted on the electrical mounting plate 12a, and the radiator pipe 25 passes through the pipe hole 12az. With this arrangement, the assembly hole 12ao can improve structural compactness between the oil cup 24 and the electrical mounting plate 12a, thereby improving space utilization of the electrical mounting plate 12a. In addition, the pipe hole 12az can prevent the radiator pipe 25 from interfering with the electrical mounting plate 12a, thus eliminating the need for the radiator pipe 25 to bypass the electrical mounting plate 12a, thereby improving structural compactness between the radiator pipe 25 and the electrical mounting plate 12a. This is also beneficial to shortening the overall length of the radiator pipe 25 and reducing the cost of the radiator pipe 25.

As shown in FIG. 25, a plurality of boss structures 12ag are formed between the first arrangement region 12ae and the second arrangement region 12af, and harness grooves 12ah for allowing the connecting harness 226 to extend through are formed between adjacent boss structures 12ag. With this arrangement, the harness grooves 12ah can prevent the connecting harness 226 from interfering with the boss structures 12ag, thus eliminating the need for the connecting harness 226 to bypass the boss structures 12ag, thereby improving structural compactness between the connecting harness 226 and the electrical mounting plate 12a. In addition, the overall length of the connecting harness 226 can be shortened, thereby reducing the overall cost of the connecting harness 226.

In the present embodiment, the second region 12aq is substantially and downwardly recessed. The connecting harness 226 further includes a plurality of connecting joints 2261, and the plurality of connecting joints 2261 are located in the second region 12aq. With this arrangement, the downwardly recessed second region 12aq can provide an arrangement platform, thereby facilitating arrangement of the connecting joints 2261 on the arrangement platform, simplifying the assembly process between the connecting joints 2261 and the second region 12aq, and improving assembly efficiency of the connecting joints 2261 and the second region 12aq.

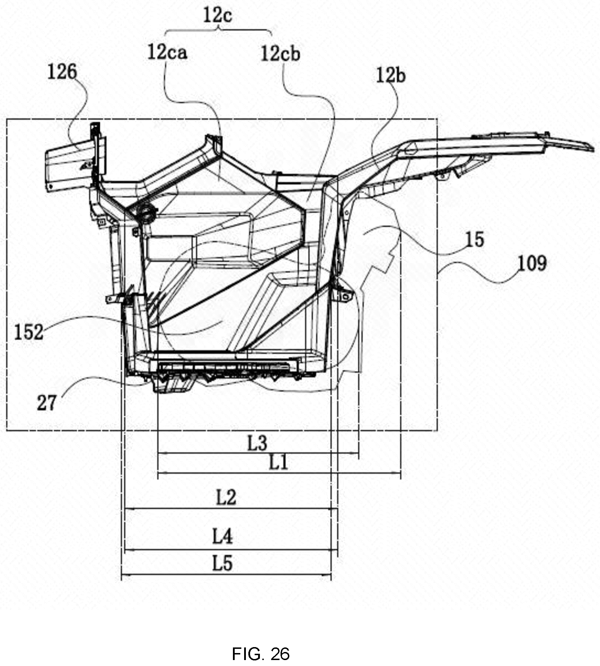

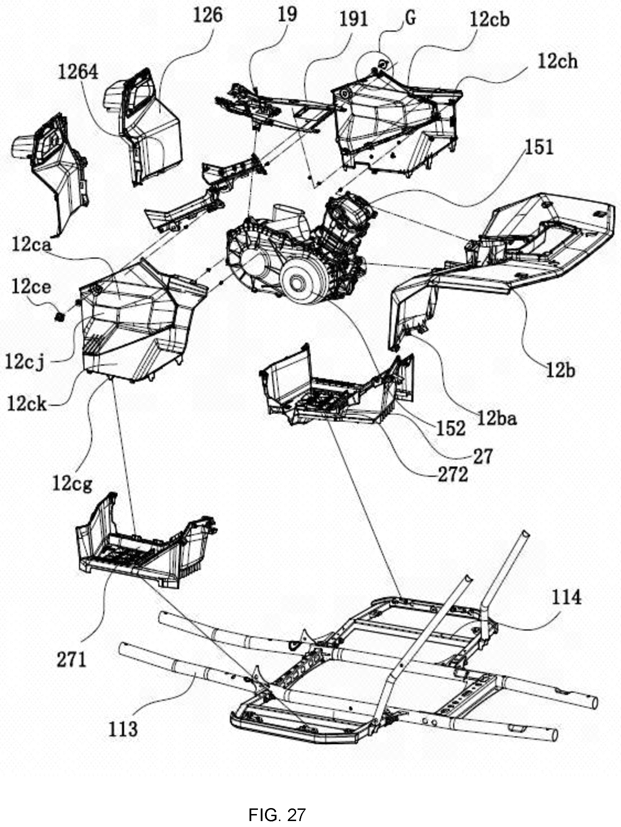

As shown in FIG. 26 and FIG. 27, the footrest assembly 27 is detachably connected to the front mudguard 126 and is also detachably connected to the rear mudguard 12b, thereby facilitating assembly and disassembly of the footrest assembly 27. Optionally, the footrest assembly 27 is used to be assembled and disassembled in the width direction of the frame 11. In the width direction of the frame 11, the footrest assembly 27 at least partially overlaps the prime power assembly 15. By removing the footrest assembly 27 from the all-terrain vehicle 100, the prime power assembly 15 is exposed in the width direction of the frame 11, thereby facilitating maintenance of the prime power assembly 15.

Optionally, removal of the footrest assembly 27 can cooperate with removal of the side panel structure 12c, thereby increasing an exposed area of the prime power assembly 15 in the width direction of the frame 11 and further improving maintenance convenience of the prime power assembly 15.

In this embodiment, a ratio of the length L1 of the prime power assembly 15 in the length direction of the frame 11 to the length L5 of the footrest assembly 27 in the length direction of the frame 11 is in the range from 1 to 1.4. Optionally, the ratio of the length L1 of the prime power assembly 15 in the length direction of the frame 11 to the length L5 of the footrest assembly 27 in the length direction of the frame 11 is in the range from 1.03 to 1.27. More Optionally, the ratio of the length L1 of the prime power assembly 15 in the length direction of the frame 11 to the length L5 of the footrest assembly 27 in the length direction of the frame 11 is 1.15. By setting the ratio of the length L1 of the prime power assembly 15 in the length direction of the frame 11 to the length L5 of the footrest assembly 27 in the length direction of the frame 11 within the above range, after the footrest assembly 27 is removed, blocking of the prime power assembly 15 by the front mudguard 126 and/or the rear mudguard 12b can be avoided, thereby facilitating maintenance of the prime power assembly 15. In addition, an excessively long footrest assembly 27 and structural redundancy of the footrest assembly 27 can be avoided, thereby improving structural compactness of the all-terrain vehicle 100.

In one embodiment, a normal projection of the prime power assembly 15 on the longitudinal center plane 10s is defined as a prime power assembly projection, and a normal projection of the footrest assembly 27 on the longitudinal center plane 10s is defined as a first footrest projection. The portion where the prime power assembly projection overlaps with the first footrest projection is defined as a third overlapping projection. A ratio of an area of the third overlapping projection to an area of the prime power assembly projection is in the range from 0.17 to 0.27. Optionally, the ratio of the area of the third overlapping projection to the area of the prime power assembly projection is in the range from 0.2 to 0.25. More Optionally, the ratio of the area of the third overlapping projection to the area of the prime power assembly projection is 0.22. By setting the ratio of the area of the third overlapping projection to the area of the prime power assembly projection within the above range, after the footrest assembly 27 is removed from the all-terrain vehicle 100, the prime power assembly 15 can be sufficiently exposed, thereby facilitating maintenance of the prime power assembly 15.

In one embodiment, the left footrest 271 and the right footrest 272 are respectively detachably connected to two sides of the front mudguard 126, and the left footrest 271 and the right footrest 272 are also respectively detachably connected to two sides of the rear mudguard 12b. With the above arrangement, the left footrest 271 and the right footrest 272 are disposed on opposite sides of the prime power assembly 15 in the width direction of the frame 11. After the left footrest 271 or the right footrest 272 is removed from the all-terrain vehicle 100, maintenance of the prime power assembly 15 at the corresponding side is facilitated.

Optionally, the left footrest 271 is arranged close to the transmission mechanism 152, and the right footrest 272 is arranged close to the engine 151. After the left footrest 271 is removed from the all-terrain vehicle 100, maintenance of the transmission mechanism 152 is facilitated. After the right footrest 272 is removed from the all-terrain vehicle 100, maintenance of the engine 151 is facilitated.

In one embodiment, a ratio of the length L3 of the transmission mechanism 152 in the length direction of the frame 11 to the length L5 of the left footrest 271 in the length direction of the frame 11 is in the range from 0.76 to 1.16. Optionally, the ratio of the length L3 of the transmission mechanism 152 in the length direction of the frame 11 to the length L5 of the left footrest 271 in the length direction of the frame 11 is in the range from 0.86 to 1.06. More Optionally, the ratio of the length L3 of the transmission mechanism 152 in the length direction of the frame 11 to the length L5 of the left footrest 271 in the length direction of the frame 11 is 0.96. Since the transmission mechanism 152 on the frame 11 has a relatively large volume, the present application mainly aims to facilitate maintenance of the transmission mechanism 152 of the prime power assembly 15. Wherein, the above arrangement can avoid an excessively large ratio of the length L3 of the transmission mechanism 152 in the length direction of the frame 11 to the length L5 of the left footrest 271 in the length direction of the frame 11, so that after the left footrest 271 is removed from the all-terrain vehicle 100, the transmission mechanism 152 is prevented from being blocked by the front mudguard 126 and/or the rear mudguard 12b. Accordingly, the transmission mechanism 152 can be sufficiently exposed, thereby improving maintenance convenience of the transmission mechanism 152. The above arrangement can also avoid an excessively small ratio of the length L3 of the transmission mechanism 152 in the length direction of the frame 11 to the length L5 of the left footrest 271 in the length direction of the frame 11, thereby avoiding redundant sections of the left footrest 271, improving space utilization of the all-terrain vehicle 100, and making the structure of the all-terrain vehicle 100 more compact. Thus, the above arrangement both facilitates maintenance of the transmission mechanism 152 and improves structural compactness of the all-terrain vehicle 100.

In one embodiment, a normal projection of the transmission mechanism 152 on the longitudinal center plane 10s is a transmission projection, and a normal projection of the left footrest 271 on the longitudinal center plane 10s is a footrest projection. The portion where the transmission projection overlaps with the footrest projection is defined as a fourth overlapping projection. A ratio of the area of the fourth overlapping projection to the area of the transmission projection is in the range from 0.2 to 0.3. Optionally, the ratio of the area of the fourth overlapping projection to the area of the transmission projection is in the range from 0.22 to 0.28. More Optionally, the ratio of the area of the fourth overlapping projection to the area of the transmission projection is 0.25. By setting the ratio of the area of the fourth overlapping projection to the area of the transmission projection within the above range, after the left footrest 271 is removed from the all-terrain vehicle 100, the transmission mechanism 152 can be sufficiently exposed, thereby facilitating maintenance of the transmission mechanism 152.

In one embodiment, the front mudguard 126 is provided with a front mounting portion 1264, and the front mounting portion 1264 is located at a lower portion of the front mudguard 126. The rear mudguard 12b is provided with a rear mounting portion12ba, and the rear mounting portion 12ba is located at a lower side of the rear mudguard 12b. The footrest assembly 27 is detachably connected to the front mounting portion 1264 and detachably connected to the rear mounting portions 12ba. After the footrest assembly 27 is removed from the front mounting portion 1264 of the front mudguard 126 and from the rear mounting portion 12ba of the rear mudguard 12b, the footrest assembly 27 can be withdrawn outward in the width direction of the frame 11, thereby realizing rapid detachment of the footrest assembly 27 and improving maintenance efficiency of the prime power assembly 15.

Optionally, the frame 11 includes the main frame 113 and side support frames 114. The side support frames 114 are distributed on two sides of the main frame 113 in the width direction of the frame 11. The side support frames 114 are fixedly connected to the main frame 113, and the footrest assembly 27 is mounted on the side support frames 114. With this arrangement, when the footrest assembly 27 is mounted on the all-terrain vehicle 100, the footrest assembly 27 is supported by the side support frames 114, thereby realizing a foot-supporting function for a driver or passenger.

Optionally, an upper side of the footrest assembly 27 defines an insertion hole 273. The side panel structure 12c is provided with an insertion portion, and the insertion portion is located at a lower portion of the side panel structure 12c and is inserted into the insertion hole 273. With this arrangement, removal of the footrest assembly 27 and the side panel structure 12c is facilitated, so that the footrest assembly 27 can be conveniently withdrawn outward in the width direction of the frame 11, thereby realizing rapid detachment of the footrest assembly 27 and improving maintenance efficiency of the prime power assembly 15.

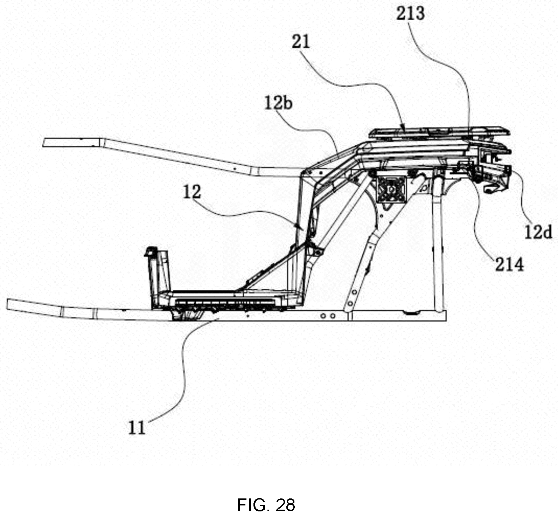

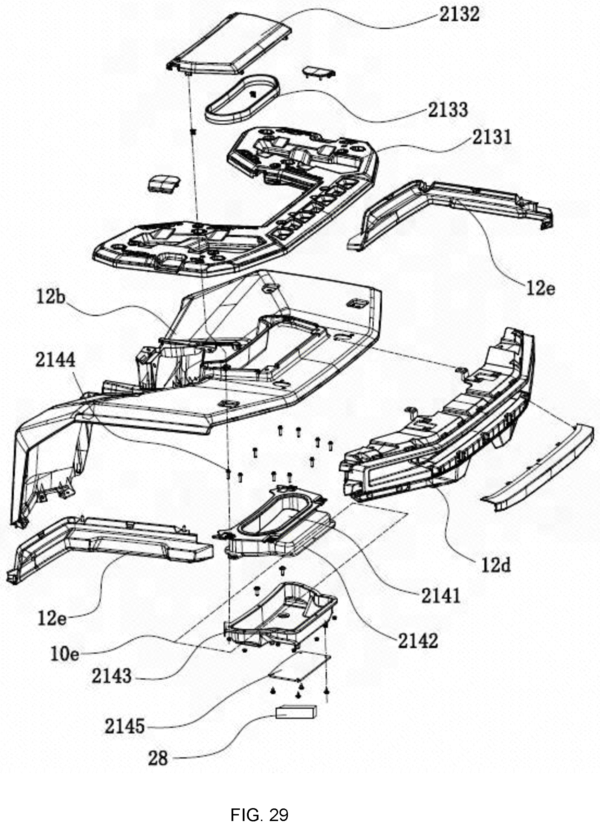

As shown in FIG. 28 and FIG. 29, a cargo box assembly 21 includes a rear cargo mounting platform 213. The rear cargo mounting platform 213 is at least partially mounted on the rear mudguard 12b and can be used to mount a rear cargo box. Optionally, the all-terrain vehicle 100 further includes a tail box assembly 214 used to provide a rear storage space of the all-terrain vehicle 100. The tail box assembly 214 is supported by the frame 11. The tail box assembly 214 has a tail box opening 2141 for placing and retrieving articles, and the tail box opening 2141 opens upward. The rear cargo mounting platform 213 is used to be capable of covering the tail box opening 2141, so that the rear cargo mounting platform 213 can serve as a tail box cover plate of the tail box assembly 214. With the above arrangement, the rear cargo mounting platform 213 can be used both to mount the rear cargo box and as the tail box cover plate of the tail box assembly 214. Thus, it is unnecessary to additionally mount a separate tail box cover plate on the tail box assembly 214, which is beneficial to simplifying the structure of the tail box assembly 214, reducing the cost of the tail box assembly 214, and making the structure of the tail box assembly 214 more compact.

In one embodiment, the tail box assembly 214 includes an upper tail box 2142 and a lower tail box 2143, and the upper tail box 2142 is fixedly connected to the lower tail box 2143. The upper tail box 2142 is also fixedly connected to the rear mudguard 12b, the lower tail box 2143 is fixedly connected to the frame 11, and the tail box opening 2141 is defined in the upper tail box 2142. An area of a normal projection of the tail box opening 2141 on the reference plane is smaller than an area of a normal projection of the tail box assembly 214 on the reference plane 102. In the present application, the opening of the tail box opening 2141 is relatively small, while the interior of the tail box assembly 214 is used to have a relatively large volume. Therefore, if the tail box assembly 214 were integrally formed, the tail box assembly 214 could not be demolded from the tail box opening 2141. In the present embodiment, the upper tail box 2142 and the lower tail box 2143 are separately provided, so that the tail box assembly 214 can be manufactured by molding. This is beneficial to increasing the volume of the upper tail box 2142 and the lower tail box 2143, so that the tail box assembly 214 can have a relatively large volume on the premise of having a relatively small tail box opening 2141, thereby improving storage performance of the tail box assembly 214.

In one embodiment, a front-most end of the tail box opening 2141 is located behind a front-most end of the tail box assembly 214. In the present application, an arrangement space at the front-most end of the tail box assembly 214 is larger than an arrangement space at the front-most end of the tail box opening 2141. With this arrangement, the tail box assembly 214 can fully utilize the arrangement space at the front-most end of the tail box assembly 214, thereby increasing the volume of the tail box assembly 214 and improving storage performance of the tail box assembly 214.

In one embodiment, the cargo box assembly 21 further includes cargo box fasteners 2144. The cargo box fasteners 2144 pass through the rear cargo mounting platform 213 and the rear mudguard 12b and are fixedly connected to the upper tail box 2142. In some embodiments, the cargo box fasteners 2144 may be bolts. The bolts pass through the rear cargo mounting platform 213 and the rear mudguard 12b and are fixedly connected to the upper tail box 2142, thereby improving mounting stability of the above components. With this arrangement, the rear cargo mounting platform 213, the rear mudguard 12b, and the upper tail box 2142 can be mounted by using the same mounting points, thereby reducing processing of mounting points on those components, simplifying processing of those components. In addition, the number of cargo box fasteners 2144 for fixing those components may be reduced, thereby facilitating cost reduction.

As an embodiment, the rear cargo mounting platform 213 includes a mounting plate main body 2131 and a cargo box middle cover 2132, and the cargo box middle cover 2132 is detachably connected to the mounting plate main body 2131. Optionally, the mounting plate main body 2131 is mounted on the rear mudguard 12b, and the cargo box middle cover 2132 covers the opening of the rear cargo box 2141. In some embodiments, the cargo box middle cover 2132 is snap-engaged with the mounting plate body 2131, thereby facilitating removal of the cargo box middle cover 2132. With this arrangement, when it is necessary to pick up articles in the tail box assembly 214, only the cargo box middle cover 2132 needs to be disassembled, and the tail box mounting plate 213 does not need to be completely disassembled, thereby facilitating improvement of the convenience of picking up articles from the tail box assembly 214.

As an embodiment, the ATV 100 includes a muffler 28 for reducing noise generated by the ATV 100. Optionally, the muffler 28 is mounted at the rear of the vehicle frame 11, and the tail box assembly 214 is positioned above the muffler 28. In some embodiments, the muffler 28 generates heat during use, so that the tail box assembly 214 above can be heated, thereby facilitating the heating and insulation of the articles in the tail box assembly 214, thereby facilitating the improvement of the functionality of the tail box assembly 214.

As another embodiment, the tail box assembly 214 further includes a heat insulation plate 2145 for insulating heat. Optionally, the heat insulation plate 214 is mounted below the lower rear cargo box 2143 in the height direction of the vehicle frame 11, and the heat insulation plate 214 is positioned between the lower rear cargo box 2143 and the muffler 28. This arrangement prevents the heat generated by the muffler 28 from being conducted into the tail box assembly 214, thereby lowering the temperature of the tail box assembly 214, thereby preventing the heat of the muffler 28 from affecting the items within the tail box assembly 214.

As an embodiment, the vehicle body cover 12 further includes a taillight mounting bracket 12d for mounting a rear taillight. Optionally, the taillight mounting bracket 12d is mounted on the rear mudguard 12b and positioned behind the rear mudguard 12b so that the taillight mounting bracket 12d, the rear mudguard12b, the tail box mounting plate 213, and the tail box assembly 214 can be combined and mounted on the vehicle frame 11. With this arrangement, when the ATV 100 is assembled, the taillight mounting bracket 12d, the rear mudguard12b, the tail box mounting plate 213, and the tail box assembly 214 can be assembled first, and then the assembled components can be assembled to the vehicle frame 11 together. With the above arrangement, it is possible to avoid a reduction in the mating accuracy between the components due to the assembly of the components to the vehicle frame 11 one by one, and thus it is beneficial to improve the assembly accuracy of the all-terrain vehicle 100. In addition, the components are assembled in advance, and the assembly process between the components and the vehicle frame 11 can be simplified without being assembled with the vehicle frame 11 one by one, thereby improving assembly efficiency.

As an embodiment, the vehicle body cover 12 further includes a decorative panel 12e mounted on two sides of the rear mudguard 12b in the width direction of the vehicle frame 11, and the color of the decorative panel 12e is different from the color of the rear mudguard 12b. Such an arrangement can improve the recognition degree of the all-terrain vehicle 100, thereby facilitating the display of the position and the outline of the all-terrain vehicle 100, and further facilitating the improvement of the driving safety of the all-terrain vehicle 100.

As an embodiment, the volume of the tail box assembly 214 is in the range from 6 L to 10 L. Optionally, the volume of the tail box assembly 214 is in the range from 7 L to 9 L. More optionally, the volume of the tail box assembly 214 is 8 L. Such an arrangement can prevent the volume of the tail box assembly 214 from being too large and causing the volume of the tail box assembly 214 to be too large, thereby preventing the tail box assembly 214 from interfering with the assembly of other components, thereby facilitating the assembly of the ATV 100. In addition, it is possible to avoid the volume of the tail box assembly 214 being too small and causing the storage space of the tail box assembly 214 to be too small, thereby facilitating improvement of the storage performance of the tail box assembly 214.

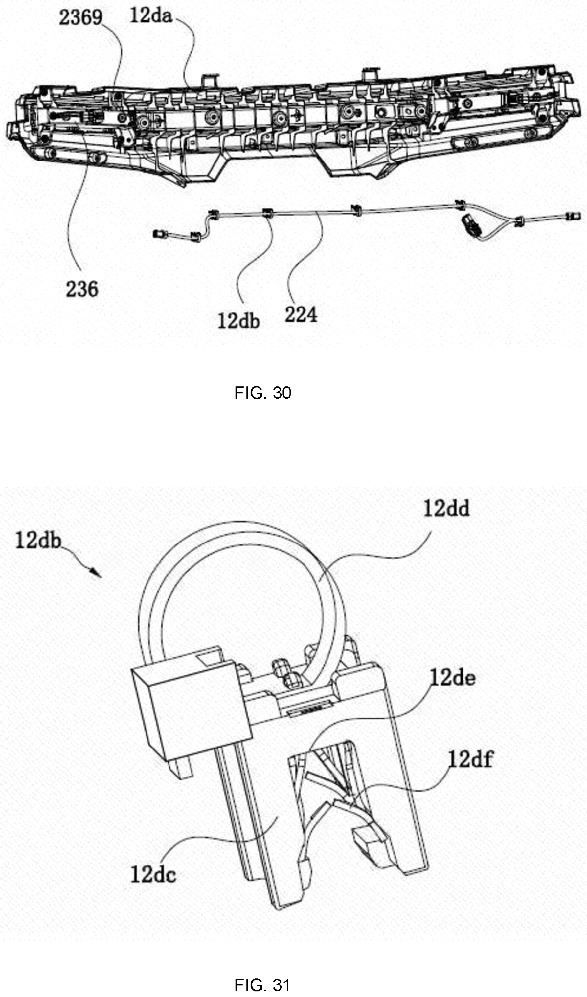

As shown in FIG. 30 and FIG. 31, the electrical assembly 22 includes a tail-light harness 224 for electrically connecting the rear tail-|light 236. In order to prevent the taillight wiring harness 224 from being worn due to shaking during driving of the ATV 100, the taillight mounting bracket 12d of the present disclosure is provided with a first mounting rib structure 12da and a wiring harness fixing structure 12db. Wherein, the first mounting rib structure 12da is integrally formed the taillight mounting bracket 12d to improve the structure strength of the taillight mounting bracket 12d. The wiring harness fixing structure 12db is clamped with the first mounting rib structure 12da, and the wiring harness fixing structure 12db is further connected to the taillight wiring harness 224, so that the taillight wiring harness 224 can be fixed to the taillight mounting bracket 12d through the wiring harness fixing structure 12db and the first mounting rib structure 12da, so as to prevent the taillight wiring harness 224 from shaking during driving of the all-terrain vehicle 100.

Optionally, the first mounting rib structure 12da has a substantially sheet-like structure, and the wire harness fixing structure 12db includes a clamping portion 12dc and a sleeve portion 12dd connected to the clamping portion 12dc, the sleeve portion 12dd can be sleeved on the taillight wiring harness 224, and the clamping portion 12dc can be clamped with the first mounting rib structure 12da, thereby realizing the connection between the taillight wiring harness 224 and the taillight mounting bracket 12d.

More optionally, the clamping portion 12dc defines a clamping slot 12de, and an elastic member 12df is mounted in the clamping slot 12de. When the clamping portion 12dc is clamped with the first mounting rib structure 12da, the first mounting rib structure 12da is at least partially located in the clamping slot 12de and abuts against the elastic member 12df. At this time, the elastic member 12df is subjected to elastic deformation, so that the elastic member 12df has a pre-load force on the first mounting rib structure 12da, thereby making the clamping between the clamping portion 12dc and the first mounting rib structure 12da more stable. The sleeve portion 12dd may be a cable tie, and a slot hole is opened in the snap portion 12dc, and one end of the cable tie passes through the slot hole and is connected to the other end of the cable tie, so that the sleeve portion 12dd can be sleeved on the taillight wiring harness 224.

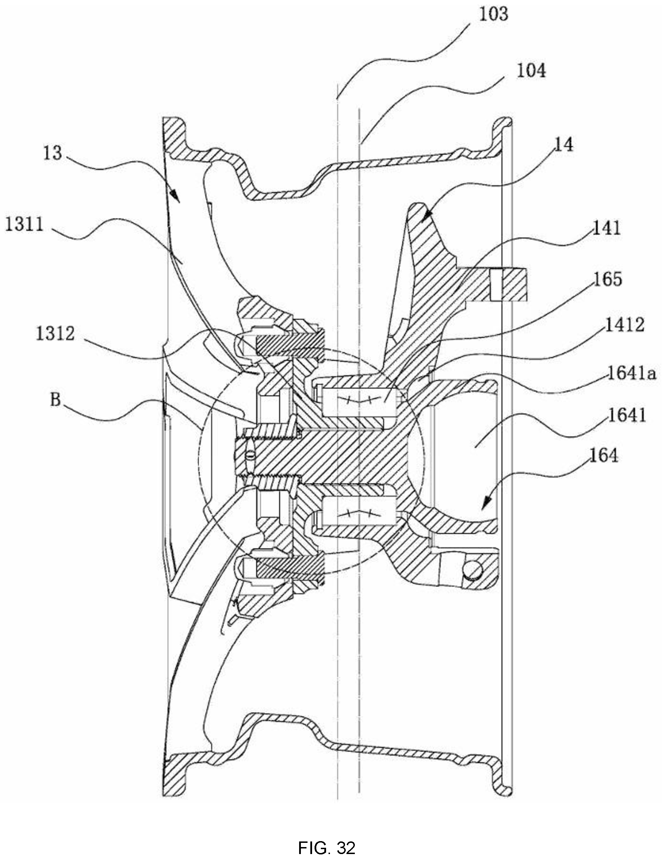

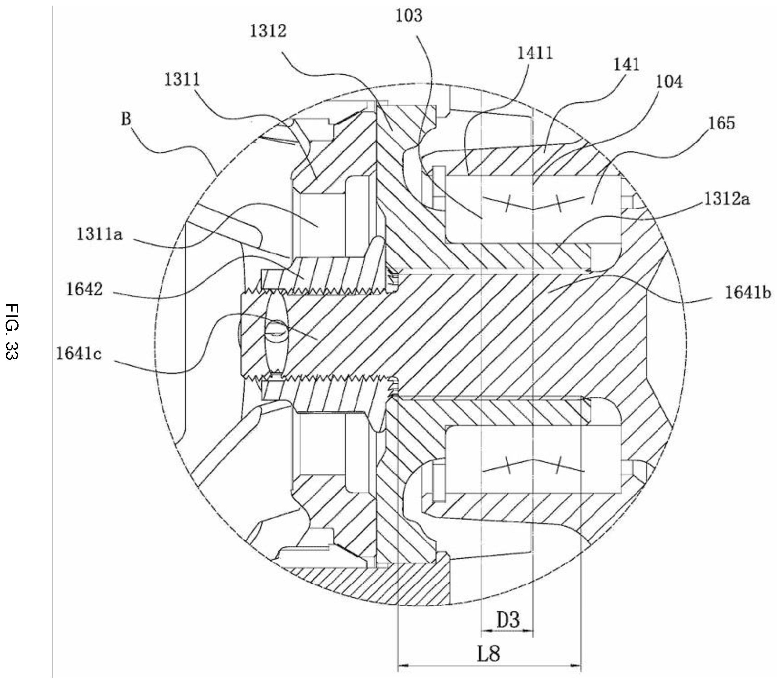

As shown in FIG. 32 to FIG. 33, the traveling system 13 includes wheels 131. The wheels 131 include a rim 1311, a tire (not shown) on which the tire is mounted, and the rim 1311 is mounted on the mounting bracket 1312. The suspension system 14 includes a knuckle 141 that connects the mounting bracket 1312 to the frame 11. The transmission assembly 16 includes a transmission half shaft 164 connected to the prime power assembly 15 in a transmission mode, and the transmission half shaft 164 includes a half shaft ball cage 1641 connected to the rim 1311 in a transmission mode. The mounting bracket 1312 is at least partially provided with a protruding portion 1312a, and the transmission assembly 16 further includes a bearing 165 sleeved on the protruding portion 1312a, and the protruding portion 1312a is rotatably connected to the knuckle 141 through the bearing 165. The half-shaft ball cage 1641 is at least partially inserted through the protrusion portion 1312a and is fixedly connected to the mounting bracket 1312. With such arrangement, the half-shaft ball cage 1641 does not need to be connected with the bearing 165, that is, the half-shaft ball cage 1641 does not need to be assembled with the bearing 165, thereby avoiding processing of the mating section connected with the bearing 165 on the half-shaft ball cage 1641, which shorten the size of the half-shaft ball cage 1641, thereby improving the structural compactness of the half-shaft ball cage 1641, and improving the space utilization rate of the half-shaft ball cage 1641. In addition, the half-shaft ball cage 1641 does not need to be processed in a mating section connected to the bearing 165, which can facilitate simplifying the processing process of the half-shaft ball cage 1641 to reduce the production cost.

A first plane and a second plane perpendicular to a width direction of the frame are defined, the first plane substantially bisects the tire, and the second plane substantially bisects the bearing, a minimum distance D3 between the first plane and the second plane in the width direction of the frame is in the range from 0 to 10 mm. Optionally, the minimum distance D3 between the first plane and the second plane in the width direction of the frame is in the range from 0 to 10 mm. More optionally, the minimum distance D3 between the first plane and the second plane in the width direction of the frame is in the range from 4 mm to 6 mm. The minimum distance D3 between the first plane 103 and the second plane 104 along the width direction of the vehicle frame 11 is the bearing offset distance of the bearing 165. Such an arrangement can help to prevent the bearing offset pitch of the bearing 165 from being too large when the minimum distance D3 between the first plane 103 and the second plane 104 along the width direction of the vehicle frame 11 is too large, thereby preventing excessive torque to the bearing 165, and thereby helping to improve the service life of the bearing 165. Also, by reducing the bearing offset pitch of the bearing 165, it is advantageous to reduce the size of the half-shaft ball cage 1641, thereby improving the structural compactness at the half-shaft ball cage 1641. In addition, by reducing the size of the half-axle ball cage 1641, it is advantageous to reduce the weight of the half-axle ball cage 1641, so that the ATV 100 is more lightweight.

As an embodiment, the knuckle 141 defines a hole 1411, the protrusion portion 1312a is at least partially located in hole 1411, the bearing 165 includes an inner ring and an outer ring, the inner ring is around the protrusion portion 1312a and cooperates with the protrusion portion 1312a, and the outer ring cooperates with the inner wall of the hole 1411. With this arrangement, the knuckle 141 can be directly connected to the mounting bracket 1312 through the bearing 165, thereby eliminating the need for transmission through the half-shaft ball cage 1641, thereby eliminating the need for assembly of the half-shaft ball cage 1641 with the knuckle 141, thereby simplifying the processing process of the half-shaft ball cage 1641. Further, by the above-described arrangement, the hole 1411 can provide a mounting space for the bearing 165 and the protrusion portion 1312a, and the structural compactness of the bearing 165 can be further improved.

As an embodiment, the knuckle 141 defines an avoidance hole 1412 in communication with the hole 1411. The inner diameter of the avoidance hole 1412 gradually increases from a direction close to the accommodation hole 1411 to a direction away from the accommodation hole 1411. The half-shaft ball cage 1641 includes a ball cage portion 1641a at least partially housed in the avoidance hole 1412. With this arrangement, the avoidance hole 1412 can prevent the ball cage portion 1641a from interfering with the knuckle 141, and facilitate the rotation of the half-axle ball cage 1641. Moreover, by positioning the ball cage portion 1641a at least partially in the avoidance hole 1412, the structural compactness of the half-axle ball cage 1641 and the knuckle 141 can be further improved, and the space utilization rate at the half-axle ball cage 1641 can be improved.

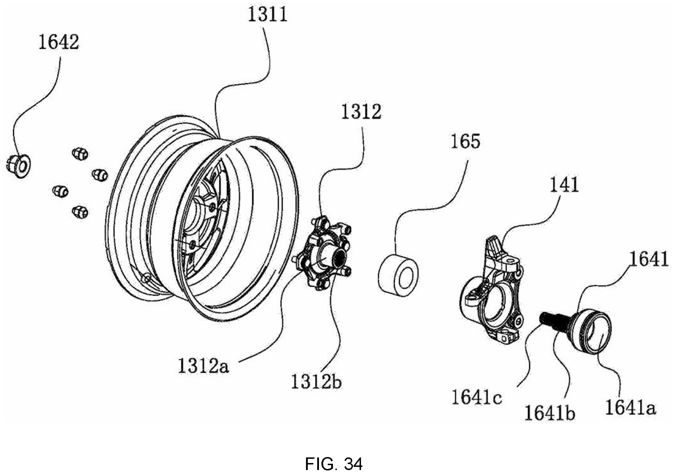

As shown in FIG. 34, the protruding portion 1312a defines an inner spline hole 1312b, and the rim 1311 defines a mounting hole 1311a communicating with the inner spline hole 1312b, and the axes of the inner spline hole 1312b and the mounting hole 1311a both substantially coincide with the axes of the rim 1311. Further, the half shaft ball cage 1641 includes an outer spline portion 1641b splined to the inner spline hole 1312b and a fixing portion 1641c penetrated through the mounting hole 1311a and fixed by a connection member 1642. With this arrangement, the spline connection enables the half shaft ball cage 1641 to drive the mounting bracket 1312 to rotate, thereby realizing the function of driving the wheel 131 to rotate. Then, the connection member 1642 and the fixing portion 1641c cooperate to improve the transmission stability of the half-shaft ball cage 1641 and the mounting bracket 1312.

As shown in FIG. 32, the knuckle 141 substantially overlaps the tire when viewed in the longitudinal direction of the frame 11. With this arrangement, the knuckle 141 can be positioned substantially in the tire, thereby facilitating improvement of structural compactness at the tire and improving the space utilization rate at the tire. Further, by the above arrangement, the half-shaft ball cage 1641 and the mounting bracket 1312 can be arranged closer to each other, so that the minimum distance D3 between the first plane 103 and the second plane 104 along the width direction of the vehicle frame 11 can be further reduced, and the bearing offset distance of the bearing 165 can be further reduced, and the torque received by the bearing 165 can be further reduced, so as to increase the service life of the bearing 165.

It should be noted that those of ordinary skill in the art may make modifications or modifications according to the above description, and all such modifications and modifications should fall within the scope of protection of the appended claims of the present application.

The above-described embodiments only express several embodiments of the present application, and the description thereof is relatively specific and detailed, but it is not to be understood as limiting the scope of patent protection. It should be pointed out that those skilled in the art can make several modifications and improvements without departing from the concept of the present application, and these all fall within the scope of protection of the present application. Therefore, the scope of protection of the present application should be determined by the appended claims.

## Claims

1. An all-terrain vehicle comprising:
a frame comprising an upper main beam, a lower main beam, and a longitudinal beam connected between the upper beam and the lower main beam;
a vehicle body cover supported by at least one of the upper main beam, the lower main beam, and the longitudinal beam;
a suspension system supported by the lower main beam;
a traveling system at least partially and fixedly connected to the frame by the suspension system, the traveling system comprising a left front wheel and a right front wheel;
an engine for driving the traveling system, the engine comprising a left cylinder, a right cylinder, a left cylinder head arranged on the left cylinder and a right cylinder head arranged on the right cylinder;
wherein
the left and the right cylinder heads are oriented toward the rear of the all-terrain vehicle; a plane perpendicular to a width direction of the frame is defined as a longitudinal center plane, the longitudinal central plane passes through a midpoint of the distance between the left front wheel and the right front wheel; a central axis of the left cylinder is defined as a left-cylinder axis, and a central axis of the right cylinder is defined as a right-cylinder axis, a horizontal distance from the left-cylinder axis to the longitudinal central plane is defined as a first distance, and a horizontal distance from the right-cylinder axis to the longitudinal central plane is defined as a second distance;
the upper main beam comprises a left upper main beam and a right upper main beam, each extending along a length direction of the all-terrain vehicle, a straddle width between the left upper main beam and the right upper main beam is defined as a third distance; a top width between the left upper main beam and the right upper main beam at a longitudinal position closest to the left-cylinder axis and the right-cylinder axis is defined as a fourth distance; the fourth distance is greater than the third distance, the first distance or the second distance is less than half of the third distance, and a sum of the first distance and the second distance is less than the fourth distance.

2. The all-terrain vehicle of claim 1, wherein the first distance is less than half of the fourth distance.

3. The all-terrain vehicle of claim 1, wherein a ratio of the first distance to the second distance is in the range from 0.4 to 0.6.

4. The all-terrain vehicle of claim 1, wherein a distance between a leftmost end of the left cylinder head and the longitudinal center plane is defined as a fifth distance, a distance between a rightmost end of the right cylinder head and the longitudinal center plane is defined as a sixth distance, and a ratio of the fifth distance to the sixth distance is in the range from 0.2 to 1.8.

5. The all-terrain vehicle of claim 4, wherein a ratio of the fifth distance to the sixth distance is in the range from 0.5 to 1.5.

6. The all-terrain vehicle of claim 4, wherein a ratio of the fifth distance to the sixth distance is in the range from 0.8 to 1.2.

7. The all-terrain vehicle of claim 1, wherein the reference plane is defined as a plane perpendicular to the height direction of the frame, and an angle defined between a cylinder projection line and the reference plane is in the range from 45° to 65°.

8. The all-terrain vehicle of claim 1, further comprising
a footrest assembly comprising left footrest serrations and right footrest serrations;
a magneto disposed on one side of the engine,
a drive pulley disposed on another side of the engine; wherein a plane perpendicular to a height direction of the frame and passing through a contact point between the traveling system and the ground is defined as a reference plane; a normal projection of the left footrest serrations on the reference plane is defined as a left-footrest-serrations projection, and a normal projection of the right footrest serrations on the reference plane is defined as a right-footrest-serrations projection, in a length direction of the frame, a distance between a rightmost end of the left-footrest-serrations projection and a rotation center of the drive pulley is in the range from 0 to 420 mm; and a distance between a leftmost end of the right-footrest-serrations projection and a rotation center of the magneto is in the range from 0 mm to 420 mm.

9. The all-terrain vehicle of claim 8, wherein in the length direction of the frame, the distance between the rightmost end of the left-footrest-serrations projection and the rotation center of the drive pulley is in the range from 40 to 380 mm; and the distance between the leftmost end of the right-footrest-serrations projection and the rotation center of the magneto is in the range from 40 mm to 380 mm.

10. The all-terrain vehicle of claim 1, wherein a distance between a leftmost end of the engine and the longitudinal center plane is defined as a seventh distance, a distance between a rightmost end of the engine and the longitudinal center plane is defined as a eighth distance, and a ratio of the seventh distance to the eighth distance is in the range from 0.6 to 1.3.

11. The all-terrain vehicle of claim 1, further comprising
a saddle assembly supported by the frame;
wherein the vehicle body cover further comprises a storage box assembly, a front mudguard, a first side cover and a second side cover; the storage box assembly, the first side cover and the second side cover are each at least partially supported by the frame, in a length direction of the frame, the storage box assembly, the first side cover and the second side cover are each at least partially located between the front mudguard and the saddle assembly, the first side cover and the second side cover are distributed on two sides of the storage box assembly in a width direction of the all-terrain vehicle; the first side cover and the front mudguard cooperatively define a first space; the second side cover and the front mudguard cooperatively define a second space, the storage box assembly is at least partially located in the first space and/or the second space, and a volume of the storage box assembly is in the range from 6 L to 10 L.

12. The all-terrain vehicle of claim 11, wherein the all-terrain vehicle further comprises an air filter mechanism, a transmission mechanism, an air filter intake conduit connected to the air filter mechanism, and a transmission intake conduit connected to the transmission mechanism, wherein, when viewed from the height direction of the frame, the storage box assembly at least partially overlaps the air filter intake conduit and at least partially overlaps the transmission intake conduit; and the air filter intake conduit and the transmission intake conduit are each at least partially located below the storage box assembly.

13. The all-terrain vehicle of claim 11, wherein the storage box assembly comprises an upper box body and a lower box body fixedly connected to the upper box body, the upper box body defines a storage opening, the upper box body and the lower box body are each at least partially located in the first space and/or the second space; and when viewed from the height direction of the frame, the storage opening does not overlap the first space and does not overlap the second space.

14. The all-terrain vehicle of claim 13, wherein the storage box assembly comprises a storage lid, and the storage lid is pivotally connected to the upper box body, and the storage lid is used to cover the storage opening; one side of the storage lid has a pivot shaft and a substantially U-shaped extension portion, the pivot shaft is located at the end of the extension portion away from the storage lid and is pivotally connected to the upper box body; and a side of the storage lid away from the extension portion has a lid connecting portion, the lower box body at least partially extends upward to form a fixing boss, the fixing boss is disposed at the rear portion of the lower box body, and the lid connecting portion is capable of passing through the fixing boss and being snap-fitted to the fixing boss.

15. The all-terrain vehicle of claim 14, wherein the extension portion has a position limiting portion, the position limiting portion is used to limit a pivot angle of the storage lid relative to the upper box body; and when the storage lid covers the storage opening, two sides of the storage lid in a width direction of the all-terrain vehicle can respectively fit against the first side cover and the second side cover.

16. The all-terrain vehicle of claim 12, wherein the storage box assembly is at least partially located in the first space, the all-terrain vehicle further comprises a gear shift assembly at least partially located in the second space, the gear shift assembly is connected to the second side cover; and the gear shift assembly is an electronic shifter.

17. The all-terrain vehicle of claim 11, wherein the vehicle body cover comprises a front mudguard and a rear mudguard, and further comprises a side panel structure located between the front mudguard and the rear mudguard, the side panel structure is detachably connected to the front mudguard and detachably connected to the rear mudguard, in the width direction of the frame, the all-terrain vehicle further comprises a prime power assembly, and the side panel structure at least partially overlaps the prime power assembly, and a ratio of a length of the prime power assembly in the length direction of the frame to a length of the side panel structure in the length direction of the frame is in the range from 1 to 1.38.

18. The all-terrain vehicle of claim 17, wherein a normal projection of the prime power assembly on the longitudinal center plane is defined as a prime power assembly projection, a normal projection of the side panel structure on the longitudinal center plane is defined as a first panel projection, an t the portion where the prime power assembly projection overlaps with the first panel projection is defined as a first overlapping projection, and a ratio of an area of the first overlapping projection to an area of the prime power assembly projection is in the range from 0.28 to 0.43.

19. The all-terrain vehicle of claim 17, wherein the side panel structure comprises a first side panel and a second side panel distributed in a width direction of the all-terrain vehicle and having substantially the same structure, the first side panel and the second side panel are respectively detachably connected to two sides of the front mudguard and also respectively detachably connected to two sides of the rear mudguard; the prime power assembly comprises a transmission mechanism and the engine; the first side panel is arranged close to the transmission mechanism; and the second side panel is arranged close to the engine.

20. The all-terrain vehicle of claim 19, wherein a ratio of a length of the transmission mechanism in the length direction of the frame to a length of the first side panel in the length direction of the frame is in the range from 0.75 to 1.14.

21. The all-terrain vehicle of claim 19, wherein a normal projection of the transmission mechanism on the longitudinal center plane is defined as a transmission projection, a normal projection of the first side panel on the longitudinal center plane is defined as a second panel projection, an portion where the transmission projection overlaps with the second panel projection is defined as a second overlapping projection, and a ratio of an area of the second overlapping projection to an area of the transmission projection is in the range from 0.41 to 0.62.

22. The all-terrain vehicle of claim 11, wherein the vehicle body cover comprises the front mudguard, a rear mudguard, and a footrest assembly located between the front mudguard and the rear mudguard; the footrest assembly is detachably connected to the front mudguard and detachably connected to the rear mudguard, the footrest assembly is used to be assembled and disassembled in a width direction of the all-terrain vehicle, in the width direction of the frame, the all-terrain vehicle further comprises a prime power assembly, and the footrest assembly at least partially overlaps the prime power assembly, and a ratio of a length of the prime power assembly in the length direction of the frame to a length of the footrest assembly in the length direction of the frame is in the range from 1 to 1.4.

23. The all-terrain vehicle of claim 22, wherein a normal projection of the prime power assembly on the longitudinal center plane is defined as a prime power assembly projection, a normal projection of the footrest assembly on the longitudinal center plane is defined as a first footrest projection, the portion where the prime power assembly projection overlaps with the first footrest projection is defined as a third overlapping projection, and a ratio of an area of the third overlapping projection to an area of the prime power assembly projection is in the range from 0.17 to 0.27.

24. The all-terrain vehicle of claim 23, wherein the prime power assembly comprises a transmission mechanism, the footrest assembly comprises a left footrest and a right footrest, and a ratio of a length of the transmission mechanism in the length direction of the frame to a length of the left footrest in the length direction of the frame is in the range from 0.76 to 1.16.

25. An all-terrain vehicle comprising:
a frame comprising an upper main beam, a lower main beam, and a longitudinal beam connected between the upper beam and the lower main beam;
a vehicle body cover supported by at least one of the upper main beam, the lower main beam, and the longitudinal beam;
a traveling system at least partially located below the frame and comprising a left front wheel, a right front wheel and a rear wheel;
a suspension system connecting the rear wheel to the frame;
an engine connected to the rear wheel in transmission mode, the engine comprising a left cylinder, a right cylinder, a left cylinder head arranged on the left cylinder and a right cylinder head arranged on the right cylinder; the engine further comprising an exhaust passage connected to the left cylinder and the right cylinder;
an exhaust assembly comprising an exhaust pipe connected to the exhaust passage and a muffler connected to the exhaust pipe;
a continuously variable transmission comprising a drive pulley and a driven pulley, the drive pulley being connected to the driven pulley in a transmission mode;
wherein
the left and the right cylinder heads are oriented toward the rear of the all-terrain vehicle; a plane perpendicular to a width direction of the frame is defined as a longitudinal center plane, the longitudinal central plane passes through a midpoint of the distance between the left front wheel and the right front wheel; a central axis of the left cylinder is defined as a left-cylinder axis, and a central axis of the right cylinder is defined as a right-cylinder axis, a horizontal distance from the left-cylinder axis to the longitudinal central plane is defined as a first distance, and a horizontal distance from the right-cylinder axis to the longitudinal central plane is defined as a second distance;
the upper main beam comprises a left upper main beam and a right upper main beam, each extending along a length direction of the all-terrain vehicle, a straddle width between the left upper main beam and the right upper main beam is defined as a third distance; a top width between the left upper main beam and the right upper main beam at a longitudinal position closest to the left-cylinder axis and the right-cylinder axis is defined as a fourth distance; the fourth distance is greater than the third distance, the first distance or the second distance is less than half of the third distance, and a sum of the first distance and the second distance is less than the fourth distance;
the drive pulley is located behind the driven pulley, a line connecting a normal projection of an axis center of the drive pulley on the longitudinal center plane and a normal projection of an axis center of the driven pulley on the longitudinal center plane is defined as a transmission projection line, the cylinder has a cylinder axis, and a normal projection of the cylinder axis on the longitudinal center plane is a cylinder projection line, and an angle defined between the cylinder projection line and the transmission projection line opens rearward of the all-terrain vehicle, the angle is in the range from 35° to 75°.

26. The all-terrain vehicle of claim 25, wherein the first distance is less than half of the fourth distance.

27. The all-terrain vehicle of claim 25, wherein a ratio of the first distance to the second distance is in the range from 0.4 to 0.6.

28. The all-terrain vehicle of claim 25, wherein a distance between a leftmost end of the left cylinder head and the longitudinal center plane is defined as a fifth distance, a distance between a rightmost end of the right cylinder head and the longitudinal center plane is defined as a sixth distance, and a ratio of the fifth distance to the sixth distance is in the range from 0.2 to 1.8.

29. The all-terrain vehicle of claim 28, wherein a ratio of the fifth distance to the sixth distance is in the range from 0.5 to 1.5.

30. The all-terrain vehicle of claim 28, wherein a ratio of the fifth distance to the sixth distance is in the range from 0.8 to 1.2.

31. The all-terrain vehicle of claim 25, wherein the angle defined between the cylinder projection line and the transmission projection line is in the range from 40° to 70°.

32. The all-terrain vehicle of claim 25, further comprising
a footrest assembly comprising left footrest serrations and right footrest serrations; a magneto disposed on one side of the all-terrain vehicle,
a drive pulley disposed on another side of the engine; wherein a plane perpendicular to a height direction of the frame and passing through a contact point between the traveling system and the ground is defined as a reference plane; a normal projection of the left footrest serrations on the reference plane is defined as a left-footrest-serrations projection, and a normal projection of the right footrest serrations on the reference plane is defined as a right-footrest-serrations projection, in a length direction of the frame, a distance between a rightmost end of the left-footrest-serrations projection and a rotation center of the drive pulley is in the range from 0 to 420 mm; and a distance between a leftmost end of the right-footrest-serrations projection and a rotation center of the magneto is in the range from 0 mm to 420 mm.

33. The all-terrain vehicle of claim 32, wherein in the length direction of the frame, the distance between the rightmost end of the left-footrest-serrations projection and the rotation center of the drive pulley is in the range from 40 to 380 mm; and the distance between the leftmost end of the right-footrest-serrations projection and the rotation center of the magneto is in the range from 40 mm to 380 mm.

34. The all-terrain vehicle of claim 25, wherein a distance between a leftmost end of the engine and the longitudinal center plane is defined as a seventh distance, a distance between a rightmost end of the engine and the longitudinal center plane is defined as a eighth distance, and a ratio of the seventh distance to the eighth distance is in the range from 0.6 to 1.3.

35. The all-terrain vehicle of claim 25, wherein an opening of the exhaust passage is oriented toward the rear of the all-terrain vehicle, a rearmost end of the continuously variable transmission is located forward of a rearmost end of the exhaust passage; a reference plane is defined a plane perpendicular to the height direction of the frame, a normal projection of the opening of the exhaust passage on the reference plane is defined as an exhaust projection, a normal projection of an axis of the rear wheel on the reference plane is a rear-axle projection line, and a minimum distance between the exhaust projection and the rear-axle projection line is in the range from 250 mm to 400 mm.

36. The all-terrain vehicle of claim 25, wherein the exhaust pipe extends rearward in a length direction of the frame, and the exhaust pipe is substantially divided by the longitudinal center plane.

37. The all-terrain vehicle of claim 25, wherein the frame comprises the upper main beam, the upper main beam comprises a left upper main beam and a right upper main beam distributed in a width direction of the all-terrain vehicle, and when viewed from the height direction of the all-terrain vehicle, the exhaust pipe is disposed between the left upper main beam and the right upper main beam.

38. The all-terrain vehicle of claim 25, wherein the suspension system comprises a rear rocker arm and a shock absorber, the rear rocker arm connects the rear wheel to the frame, two ends of the shock absorber are respectively connected to the rear rocker arm and the frame, and when viewed from a width direction of the all-terrain vehicle, the shock absorber at least partially overlaps the exhaust pipe.

39. The all-terrain vehicle of claim 25, further comprising a fuel tank for supplying energy to the engine, wherein the vehicle body cover comprises a front mudguard, the traveling system comprises the front wheels, a first plane is defined as a plane perpendicular to the length direction of the all-terrain vehicle and passing through a rotation axis of the front wheels, a second plane is defined as a plane perpendicular to the height direction of the all-terrain vehicle and passing through the rotation axis of the front wheels, and the fuel tank is located behind the first plane, at least partially forward of the engine, and the fuel tank is located above the second plane, and at least partially below the front mudguard.

40. The all-terrain vehicle of claim 39, wherein a minimum distance between the fuel tank and the first plane in the length direction of the all-terrain vehicle is defined as a first distance, a distance between the rotation axis of the front wheel and a rotation axis of the rear wheel in the length direction of the all-terrain vehicle is defined as a wheelbase, and a ratio of the first distance to the wheelbase is in the range from 0.1 to 0.16.

41. The all-terrain vehicle of claim 25, wherein the exhaust pipe comprises a corrugated pipe and rigid pipes, both ends of the corrugated pipe are connected to the rigid pipes, the rigid pipes are respectively connected to the exhaust passage and the muffler, and a length of the corrugated pipe is in the range from 100 mm to 200 mm.

42. The all-terrain vehicle of claim 25, wherein a ratio of a maximum width occupied by the cylinder heads in a width direction of the frame to a maximum width occupied by the cylinder is in the range from 0.63 to 0.9.

43. The all-terrain vehicle of claim 25, wherein a reference plane is defined as a plane perpendicular to the height direction of the frame and passing through a contact point between the traveling system and the ground, and an angle defined between the cylinder projection line and the reference plane is in the range from 45° to 65°.

44. The all-terrain vehicle of claim 25, further comprising
a saddle assembly and an electrical assembly, wherein the saddle assembly is supported by the frame, the electrical assembly comprises an electronic control unit for controlling a prime power assembly, the saddle assembly comprises a seat cushion detachably connected to the frame, the seat cushion is located above the prime power assembly, the electronic control unit is located between the seat cushion and the prime power assembly, and when viewed from the height direction of the frame, the seat cushion at least partially overlaps the electronic control unit.

45. The all-terrain vehicle of claim 44, wherein the prime power assembly comprises the engine and an air filter mechanism for supplying air to the engine, the air filter mechanism is connected to the engine, the air filter mechanism is located between the prime power assembly and the saddle assembly, and the electronic control unit is located above the air filter mechanism.

46. The all-terrain vehicle of claim 45, wherein the engine comprises an engine body and a cylinder head connected to the engine body, the air filter mechanism is at least partially located above the engine body, and the air filter mechanism is located forward of the cylinder head.

47. The all-terrain vehicle of claim 46, wherein the cylinder has the cylinder axis, the normal projection of the cylinder axis on the longitudinal center plane is defined as a cylinder projection line, a reference plane is defined as a plane perpendicular to the height direction of the frame, an angle defined between the cylinder projection line and the reference plane is in the range from 50° to 60°, and the angle opens toward the rear of the all-terrain vehicle.

48. The all-terrain vehicle of claim 45, further comprising
a transmission mechanism, wherein the transmission mechanism and the engine are distributed in a width direction of the frame, and the transmission mechanism is connected to the engine in a transmission mode,
wherein the electronic control unit is at least partially located above the engine and at least partially located above the transmission mechanism.

49. The all-terrain vehicle of claim 25, further comprising
an electrical assembly at least partially disposed on the vehicle body cover or the frame, the electrical assembly comprising a body control module and a dashboard;
wherein the vehicle body cover comprises an dashboard mounting cover, the dashboard and the body control module are both mounted on the dashboard mounting cover, the body control module is located below the dashboard, a reference plane is defined as a plane perpendicular to the height direction of the frame and passing through a lowermost end of the traveling system, and a minimum distance between the body control module and the reference plane in the height direction of the frame is in the range from 850 mm to 1270 mm.

50. The all-terrain vehicle of claim 49, wherein the minimum distance between the body control module and the reference plane in the height direction of the frame is in the range from 950 mm to 1170 mm.

51. The all-terrain vehicle of claim 49, wherein the dashboard mounting cover comprises an dashboard front cover and an dashboard upper cover, the dashboard front cover is at least partially located forward of the dashboard upper cover, the dashboard upper cover is located on the dashboard front cover and is connected to the dashboard front cover, the dashboard is mounted on the dashboard upper cover; the dashboard upper cover and the dashboard front cover are connected to define an accommodation space, and the body control module is disposed in the accommodation space.

52. The all-terrain vehicle of claim 51, wherein the frame comprises a support frame located in the accommodation space, the support frame connects the dashboard front cover and the dashboard upper cover and is used to support the dashboard front cover and the dashboard upper cover, and the body control module is mounted on the support frame.

53. The all-terrain vehicle of claim 52, wherein the support frame comprises a front transverse rod, a rear transverse rod, a left longitudinal rod and a right longitudinal rod; two ends of the left longitudinal rod are respectively connected to one end of the front transverse rod and one end of the rear transverse rod; two ends of the right longitudinal rod are respectively connected to the other end of the front transverse rod and the other end of the rear transverse rod; two ends of the front transverse rod are both connected to the dashboard front cover; and rear ends of the left longitudinal rod and the right longitudinal rod are both connected to the dashboard upper cover.

54. The all-terrain vehicle of claim 53, wherein the body control module is mounted on the front transverse rod and the rear transverse rod, and the body control module is further mounted on at least one of the left longitudinal rod and the right longitudinal rod.

55. The all-terrain vehicle of claim 51, wherein the dashboard upper cover is provided with a hook structure and a first insertion structure, the hook structure and the first insertion structure are both located at the front portion of the dashboard upper cover, the dashboard front cover is provided with an insertion groove and a snap-fit portion, the insertion groove is used to be inserted and mated with the first insertion structure, the first insertion structure abuts against a groove bottom of the insertion groove, and the snap-fit portion is used to be snap-fitted to the hook structure.

56. The all-terrain vehicle of claim 55, wherein the dashboard front cover further at least partially surrounds two sides of the dashboard upper cover in a width direction of the all-terrain vehicle, and the two sides of the dashboard upper cover in the width direction of the all-terrain vehicle are fixedly connected to the dashboard front cover.

57. The all-terrain vehicle of claim 51, wherein the vehicle body cover further comprises a storage box assembly at least partially supported by the frame, the storage box assembly is at least partially located behind the dashboard upper cover, and the dashboard upper cover is snap-fitted to the storage box assembly.

58. The all-terrain vehicle of claim 51, wherein the vehicle body cover further comprises a front mudguard, the dashboard front cover is mounted on the front mudguard, the dashboard front cover is provided with a second insertion structure and a snap-fit portion, the second insertion structure is located at the front portion of the dashboard front cover, the snap-fit portion is located on two sides of the dashboard front cover in a width direction of the all-terrain vehicle, the front mudguard is provided with an insertion port and a snap-fit port, the insertion port is used to be inserted and mated with the second insertion structure, and the snap-fit port is used to be snap-fitted to the snap-fit portion.

59. The all-terrain vehicle of claim 25, wherein the vehicle body cover further comprises a front mudguard, the all-terrain vehicle further comprises an electrical assembly at least partially disposed on the vehicle body cover or the frame; and the vehicle body cover comprises an electrical mounting plate supported by the frame and used to carry at least portion of the electrical assembly, the electrical mounting plate being located below the front mudguard and provided with a hook structure and a fixing portion, the hook structure being snap-fitted to the frame and the fixing portion being fixedly connected to the frame.

60. The all-terrain vehicle of claim 59, wherein the hook structure comprises a hook body and a hook portion integrally formed with the hook body, an opening is defined between the hook portion and the electrical mounting plate, the frame passes through the opening and is snap-fitted with the hook structure, a guide portion is formed at the hook portion close to the opening, and a bending direction of the guide portion is opposite to a bending direction of the hook portion.

61. The all-terrain vehicle of claim 59, wherein the electrical assembly comprises a connecting harness, a plurality of hook structures are provided, gaps are defined between the hook structures, and the gaps are used to avoid the connecting harness.

62. The all-terrain vehicle of claim 59, wherein the hook structure forms a relief portion used to avoid interference of the front mudguard, so that an assembly clearance exists between the front mudguard and the relief portion.

63. The all-terrain vehicle of claim 59, wherein the electrical mounting plate defines a first arrangement region and a second arrangement region, the first arrangement region is located forward of the second arrangement region, the electrical assembly comprises electrical devices and a connecting harness, the electrical devices are located in the first arrangement region, and the connecting harness is located in the second arrangement region; the first arrangement region comprises a first region, a second region, a third region and a fourth region, the first region is located forward of the second region, the third region and the fourth region are distributed on two sides of the first region and the second region in a width direction of the frame, the electrical devices comprise a battery, a telematics box, an on-board diagnostics module, a passive entry passive start module and a fuse box, the all-terrain vehicle further comprises an oil cup and a radiator pipe, the telematics box, the on-board diagnostics module and the passive entry passive start module are all located in the first region, the battery is mounted in the second region, the fuse box is located in the third region, the oil cup is mounted in the fourth region, and the radiator pipe passes through the fourth region.

64. An all-terrain vehicle comprising:
a frame comprising an upper main beam, a lower main beam and a longitudinal beam connected between the upper main beam and the lower main beam;
a vehicle body cover supported by at least one of the upper main beam, the lower main beam, and the longitudinal beam;
a suspension system supported by the lower main beam;
a traveling system connected to the frame through the suspension system, the traveling system comprising a left front wheel and a right front wheel;
an engine for driving the traveling system, the engine comprising a left cylinder, a right cylinder, a left cylinder head arranged on the left cylinder and a right cylinder head arranged on the right cylinder;
wherein
the left and the right cylinder heads are oriented toward the rear of the all-terrain vehicle; a plane perpendicular to a width direction of the frame is defined as a longitudinal center plane, the longitudinal central plane passes through a midpoint of the distance between the left front wheel and the right front wheel; a central axis of the left cylinder is defined as a left-cylinder axis, and a central axis of the right cylinder is defined as a right-cylinder axis, a horizontal distance from the left-cylinder axis to the longitudinal central plane is defined as a first distance, and a horizontal distance from the right-cylinder axis to the longitudinal central plane is defined as a second distance;
the upper main beam comprises a left upper main beam and a right upper main beam, each extending along a length direction of the all-terrain vehicle, a straddle width between the left upper main beam and the right upper main beam is defined as a third distance; a top width between the left upper main beam and the right upper main beam at a longitudinal position closest to the left-cylinder axis and the right-cylinder axis is defined as a fourth distance; the fourth distance is greater than the third distance, the first distance or the second distance is less than half of the third distance, and a sum of the first distance and the second distance is less than the fourth distance;
the engine comprises a cylinder, two cylinder heads arranged side by side on the cylinder and cylinder head covers mounted on the cylinder heads; the cylinder heads are oriented toward the rear of the all-terrain vehicle; a reference plane is defined as a plane perpendicular to the height direction of the frame and passing through a contact point between the traveling system and the ground\; a normal projection of a cylinder head cover on the reference plane is defined as a cylinder-head-cover projection region; a region enclosed by a normal projection of the upper main beam on the reference plane along the height direction of the frame is defined as an upper-main-beam projection enclosed region; a portion of the cylinder-head-cover projection region falling within the upper-main-beam projection enclosed region is defined as an enclosed-region projection; and a ratio of an area of the enclosed-region projection to an area of the cylinder-head-cover projection region is in the range from 0.6 to 0.9.

65. The all-terrain vehicle of claim 64, wherein the first distance is less than half of the fourth distance.

66. The all-terrain vehicle of claim 64, wherein a ratio of the first distance to the second distance is in the range from 0.4 to 0.6.

67. The all-terrain vehicle of claim 64, wherein a distance between a leftmost end of the left cylinder head and the longitudinal center plane is defined as a fifth distance, a distance between a rightmost end of the right cylinder head and the longitudinal center plane is defined as a sixth distance, and a ratio of the fifth distance to the sixth distance is in the range from 0.2 to 1.8.

68. The all-terrain vehicle of claim 67, wherein a ratio of the fifth distance to the sixth distance is in the range from 0.5 to 1.5.

69. The all-terrain vehicle of claim 67, wherein a ratio of the fifth distance to the sixth distance is in the range from 0.8 to 1.2.

70. The all-terrain vehicle of claim 64, wherein the reference plane is defined as a plane perpendicular to the height direction of the frame, and an angle defined between a cylinder projection line and the reference plane is in the range from 45° to 65°.

71. The all-terrain vehicle of claim 64, further comprising
a footrest assembly comprising left footrest serrations and right footrest serrations; a magneto disposed on one side of the engine,
a drive pulley disposed on another side of the engine; wherein a plane perpendicular to a height direction of the frame and passing through a contact point between the traveling system and the ground is defined as a reference plane; a normal projection of the left footrest serrations on the reference plane is defined as a left-footrest-serrations projection, and a normal projection of the right footrest serrations on the reference plane is defined as a right-footrest-serrations projection, in a length direction of the frame, a distance between a rightmost end of the left-footrest-serrations projection and a rotation center of the drive pulley is in the range from 0 to 420 mm; and a distance between a leftmost end of the right-footrest-serrations projection and a rotation center of the magneto is in the range from 0 mm to 420 mm.

72. The all-terrain vehicle of claim 71, wherein in the length direction of the frame, the distance between the rightmost end of the left-footrest-serrations projection and the rotation center of the drive pulley is in the range from 40 to 380 mm; and the distance between the leftmost end of the right-footrest-serrations projection and the rotation center of the magneto is in the range from 40 mm to 380 mm.

73. The all-terrain vehicle of claim 64, wherein a distance between a leftmost end of the engine and the longitudinal center plane is defined as a seventh distance, a distance between a rightmost end of the engine and the longitudinal center plane is defined as a eighth distance, and a ratio of the seventh distance to the eighth distance is in the range from 0.6 to 1.3.

74. The all-terrain vehicle of claim 64, wherein the ratio of the area of the enclosed-region projection to the area of the cylinder-head-cover projection region is in the range from 0.7 to 0.85.

75. The all-terrain vehicle of claim 64, wherein the ratio of the area of the enclosed-region projection to the area of the cylinder-head-cover projection region is in the range from 0.75 to 0.8.

76. The all-terrain vehicle of claim 64, wherein in the height direction of the frame, a distance between an uppermost end of the cylinder head cover and a lowermost end of the upper main beam is in the range from 10 mm to 50 mm.

77. The all-terrain vehicle of claim 64, wherein in the height direction of the frame, a distance between an uppermost end of the cylinder head cover and a lowermost end of the upper main beam is in the range from 20 mm to 40 mm.

78. The all-terrain vehicle of claim 64, wherein in the height direction of the frame, a distance between an uppermost end of the cylinder head cover and a lowermost end of the upper main beam is in the range from 25 mm to 35 mm.

79. The all-terrain vehicle of claim 64, wherein a preset gap is defined between the left cylinder head and the right cylinder head in a width direction of the frame, and the preset gap is in the range from 6 mm to 12 mm.

80. The all-terrain vehicle of claim 79, wherein a preset gap is defined between the left cylinder head and the right cylinder head in a width direction of the frame, and the preset gap is in the range from 8 mm to 10 mm.

81. The all-terrain vehicle of claim 64, further comprising
a steering assembly disposed on the frame and located at the front of the all-terrain vehicle; wherein the engine further comprises an air intake assembly and an air intake port, the air intake port is disposed on a housing of the engine and connected to the air intake assembly, and the air intake port is disposed between the steering assembly and the cylinder head.

82. The all-terrain vehicle of claim 81, wherein a normal projection of the frame on the reference plane is defined as a frame projection, a normal projection of the air intake port on the reference plane is defined as an air-intake-port projection, and the air-intake-port projection is disposed in a region outside the frame projection.

83. The all-terrain vehicle of claim 64, wherein the vehicle body cover comprises a rear mudguard, the all-terrain vehicle further comprises a cargo box assembly and a tail box assembly, the cargo box assembly comprises a tail box mounting plate at least partially mounted on the rear mudguard, the tail box assembly is supported by the frame; the tail box assembly has a tail box opening for placing and retrieving articles, the tail box opening opens upward, and the tail box mounting plate is used to be capable of covering the tail box opening, so that the tail box mounting plate can serve as a tail box cover plate of the tail box assembly.

84. The all-terrain vehicle of claim 83, wherein the tail box assembly comprises an upper tail box and a lower tail box, the upper tail box is fixedly connected to the lower tail box and is also fixedly connected to the rear mudguard, the lower tail box is fixedly connected to the frame, the tail box opening is formed in the upper tail box; an area of a normal projection of the tail box opening on the reference plane is smaller than an area of a normal projection of the tail box assembly on the reference plane.

85. The all-terrain vehicle of claim 83, wherein the rear cargo mounting platform comprises a mounting plate body and a cargo box middle cover detachably connected to the mounting plate body, the mounting plate body is mounted on the rear mudguard, and the cargo box middle cover covers the tail box opening.

86. The all-terrain vehicle of claim 64, wherein the vehicle body cover comprises a taillight mounting bracket, the all-terrain vehicle further comprises an electrical assembly, the electrical assembly comprises a rear taillight mounted on the taillight mounting bracket and a taillight wiring harness electrically connected to the rear taillight; the taillight mounting bracket is provided with a first mounting rib structure and a harness fixing structure, the harness fixing structure is snap-fitted to the first mounting rib structure and is further connected to the taillight harness; the first mounting rib structure is substantially plate-shaped; the harness fixing structure comprises a snap-fit portion, and the snap-fit portion is snap-fitted to the first mounting rib structure.

87. The all-terrain vehicle of claim 86, wherein the harness fixing structure comprises a sleeving portion connected to the snap-fit portion, the sleeving portion sleeves the taillight harness; the snap-fit portion defines a snap groove, an elastic member is mounted in the snap groove, and when the snap-fit portion is snap-fitted to the first mounting rib structure, the first mounting rib structure is at least partially located in the snap groove and abuts against the elastic member, the elastic member has a pre-tightening force against the first mounting rib structure; and the sleeving portion is a cable tie, the snap-fit portion defines a slot, and one end of the cable tie passes through the slot and is connected to another end of the cable tie.

88. The all-terrain vehicle of claim 64, wherein the traveling system comprises the wheels, each of the wheels comprises a rim, a tire and a mounting bracket, the tire is mounted on the rim, and the rim is mounted on the mounting bracket; the suspension system comprises a knuckle connecting the mounting bracket to the frame; the all-terrain vehicle further comprises a half shaft, the half shaft comprises a half-shaft constant velocity joint connected to the rim in a transmission mode; the mounting bracket at least partially forms a protruding portion, a transmission assembly further comprises a bearing sleeved on the protruding portion, the protruding portion is rotatably connected to the knuckle through the bearing, the half-shaft constant velocity joint at least partially passes through the protruding portion and is fixedly connected to the mounting bracket; a first plane and a second plane perpendicular to a width direction of the frame are defined, the first plane substantially bisects the tire, and the second plane substantially bisects the bearing, in the width direction of the frame, a minimum distance between the first plane and the second plane is in the range from 0 to 10 mm.

89. The all-terrain vehicle of claim 88, wherein the knuckle defines an accommodation hole, the protruding portion is at least partially located in the accommodation hole, the bearing comprises an inner ring and an outer ring, the inner ring surrounds and mates with the protruding portion, and the outer ring mates with and is fixed to an inner wall of the accommodation hole; the knuckle defines an avoidance hole communicating with the accommodation hole, an inner diameter of the avoidance hole gradually increases in a direction from a position proximate to the accommodation hole to a position away from the accommodation hole, the half-shaft constant velocity joint comprises a joint portion, the joint portion is at least partially located in the avoidance hole, and an axis of the accommodation hole substantially coincides with an axis of the rim.
